# FASCICULE DE BREVET EUROPEEN

(11) **EP 4 286 140 B1**
(45) Date de publication et mention de la délivrance du brevet: **08.04.2026**
(21) Numéro de dépôt: 22305805.8
(22) Date de dépôt: 02.06.2022
(51) Int. Cl.: B29C 65/06, B29C 65/18, B29C 65/32, B29C 65/72, B29C 65/78, B29K 101/12

(54) **PROCEDE ET MACHINE DE THERMOSOUDAGE PAR FRICTION ENTRE DEUX FILMS THERMOSCELLABLES, VIA UN OUTIL ROTATIF PRECHAUFFE ET A VARIATION DE VITESSE DE ROTATION**
VERFAHREN UND MASCHINE ZUM REIBSCHWEISSEN VON ZWEI HEISSVERSIEGELBAREN FOLIEN MITTELS EINES VORGEHEIZTEN ROTIERENDEN WERKZEUGS MIT VARIABLER DREHGESCHWINDIGKEIT
METHOD AND MACHINE FOR FRICTION THERMOWELDING BETWEEN TWO HEAT-SEALABLE FILMS, VIA A PREHEATED ROTARY TOOL AND WITH VARIATION IN ROTATION SPEED

(43) Date de publication de la demande: 06.12.2023
(73) Titulaire: Sealester, 72400 La Ferté-Bernard (FR)
(72) Inventeur: FOURMAUX, Clément, 72400 La Ferté-Bernard (FR); TANNOUS, Queen, 72400 La Ferté-Bernard (FR)
(74) Mandataire: Gauchet, Fabien Roland

(56) Documents cités:
- TANNOUS QUEEN ET AL: "A new friction welding process for soft packaging applications", INTERNATIONAL JOURNAL OF MATERIAL FORMING, SPRINGER PARIS, PARIS, vol. 15, no. 3, 10 March 2022 (2022-03-10), XP037712131, ISSN: 1960-6206, [retrieved on 20220310], DOI: 10.1007/S12289-022-01668-6

## Description

### DOMAINE TECHNIQUE

L'invention relève du domaine de l'assemblage par thermosoudage par friction entre deux films multicouches thermoscellants qui sont superposés, en utilisant un outil rotatif déplacé suivant une trajectoire prédéfinie en application contre l'un des films. L'invention a pour objet un tel procédé de thermosoudage par friction entre deux films par scellement thermique de couches thermoscellables des films qui sont appliquées l'une contre l'autre, et une machine à commande numérique de mise en œuvre de ce procédé.

### ETAT DE LA TECHNIQUE

Il est courant de former des emballages souples à partir de films multicouches qui sont superposés et assemblés entre eux par thermosoudage. Le thermosoudage entre les films est réalisé suivant une ligne de soudure plus ou moins large et de configuration plus ou moins complexe selon l'emballage à obtenir.

Les couches des films comprennent une couche externe plus ou moins épaisse, souple ou rigide, et une couche interne via laquelle les films sont soudés l'un à l'autre. A cet effet, les couches internes des films sont thermosoudables l'une à l'autre en étant couramment issues d'un polymère ou d'un vernis de scellement, ou autrement dit sont scellées thermiquement entre elles par suite de leur chauffage à leur température de fusion puis de leur refroidissement. La couche externe est potentiellement issue d'un matériau polymère ou de tout autre matériau ménageant un support de la couche interne. Un tel matériau support de la couche interne est par exemple issu d'un matériau cellulaire potentiellement revêtu d'une couche d'habillage en polymère ou par exemple encore est issu d'un matériau composite, tel qu'un matériau issu de fibres cohésives entre elles.

Pour leur soudage entre eux, les films sont installés en superposition à un poste de soudage d'une machine de thermosoudage, les couches internes des films étant alors orientées l'une vers l'autre. Les films sont couramment conditionnés en une bande enroulée autour d'un même rouleau et qui est repliée sur elle-même en deux flans superposés ménageant les films à sceller l'un à l'autre, ou sont conditionnés en bandes respectives enroulées autour d'un rouleau qui leur est affecté, le ou les rouleaux étant installé(s) sur un dévidoir équipant le bâti de la machine. Les emballages sont ainsi successivement formés au poste de soudage par défilement pas à pas de bandes distinctes dont sont respectivement issus les films ou d'une même bande dont sont issus les films par repli de la bande sur elle-même. Les films soudés l'un à l'autre sont ensuite découpés et l'emballage obtenu est retiré de la machine de thermosoudage.

Le thermosoudage des films entre eux est réalisé par chauffage des films via un outil chauffant qui est appliqué contre la couche externe de l'un des films. Par suite d'une montée en température des films à une température de consigne, leur échauffement provoque une fusion de leur couche interne et par suite après leur refroidissement le soudage des films l'un à l'autre. Il est courant que la machine de thermosoudage comporte une commande numérique de pilotage de la machine effectuant différentes opérations permettant l'obtention de l'emballage.

De nombreuses techniques de thermosoudage des films sont utilisées. Le choix de l'utilisation de l'une ou l'autre de ces différentes techniques de thermosoudage dépend essentiellement de l'emballage à obtenir. Il est notamment recherché le meilleur compromis entre différents facteurs à prendre en compte, dont notamment :
- ) les matériaux dont sont issus les films thermoscellables, notamment les matériaux dont la couche externe et la couche interne des films sont respectivement issues,
- ) la température de fusion de la couche interne des films et cela sans risque de dégradation significative de leurs couches externes respectives,
- ) la configuration plus ou moins complexe de la ligne de soudure à obtenir,
- ) les cadences de production des emballages successivement obtenus, et/ou
- ) les modalités de paramétrage par un opérateur de la commande numérique de la machine pour réaliser un thermosoudage de qualité entre les films qui soit conforme au cahier des charges de l'emballage à obtenir.

Dans le cadre de l'invention, il est connu la technique du thermosoudage par friction, tel qu'il ressort par exemple des documents FR3023744-B1 (DELTA COMPOSANTS SA) et FR3023745-B1 (DELTA COMPOSANTS SA). Selon cette technique, le soudage entre les films est réalisé par un outil rotatif qui est appliqué contre la couche externe de l'un premier des films couvrant l'autre deuxième des films. L'outil rotatif est déplacé à la surface de la couche externe du premier film le long d'une trajectoire prédéfinie définissant l'extension de la ligne de soudure des films l'un à l'autre à obtenir, la largeur de la ligne de soudure étant quant à elle définie par le diamètre de la surface d'application de l'extrémité distale de l'outil rotatif contre le premier film.

La friction exercée par l'outil rotatif appliqué contre le premier film génère une élévation de la température des films à une température prédéfinie selon les matériaux dont ils sont issus. Une telle élévation de température permet d'augmenter la mobilité de la chaîne polymère des couches internes respectives des films, et ainsi d'obtenir une inter-diffusion entre lesdites chaînes polymères procurant le soudage des films l'un à l'autre après leur refroidissement.

Pour optimiser l'efficacité de la soudure obtenue entre les films le long de la ligne de soudure, il est connu de compléter la friction opérée par un malaxage des films par l'outil rotatif appliqué contre le premier film. Une telle technique de thermosoudage par friction-malaxage a par exemple été décrite par le document FR3023745-B1 (DELTA COMPOSANTS SA).

Selon une telle technique de thermosoudage par friction-malaxage, l'outil rotatif appliqué contre le premier film suit une trajectoire effective plus complexe que celle définissant la ligne de soudure obtenue entre les films. L'outil rotatif est en outre déplacé le long de la ligne de soudage avec une succession de mouvements d'avance, de recul et de mouvements croisés avec les mouvements d'avance et/ou de recul.

Ceci a pour effet de générer un malaxage des couches internes des films entre elles le long de la trajectoire effective de l'outil définissant la ligne de soudure, à partir d'une succession de croisements du déplacement de la face de l'outil rotatif appliquée contre la couche externe du premier film.

En résumé par suite de la friction par rotation de l'outil rotatif contre le premier film et de son déplacement suivant ladite trajectoire - selon un cheminement plus ou moins complexe en cas notamment d'un thermosoudage par friction-malaxage - l'outil rotatif s'échauffe. Ceci a pour effet à la fois de porter les couches internes des films à leur température de fusion et de favoriser leur inter-diffusion de part et d'autre de l'interface de soudage des films entre eux, la soudure obtenue étant générée après figeage des chaînes polymères par refroidissement.

Il est également connu un procédé de thermosoudage et la machine associée des travaux de Mme Tannous publiés en 2022 dans la revue scientifique « international journal of material forming » volume 15 article n°19 qui est pertinent dans le cadre de l'invention..

Il est ainsi procuré les avantages de permettre un soudage des films entre eux suivant une trajectoire potentiellement complexe - qui est adaptable selon la ligne de soudure entre les films de l'emballage à obtenir - et cela en limitant les temps d'arrêt de production en cas d'une modification de la trajectoire à suivre par l'outil rotatif selon des emballages différenciés à obtenir.

Pour rappel et si besoin préciser les notions et/ou termes relatifs utilisés par la suite qui sont communément à la portée de la compréhension de l'homme du métier relevant du thermosoudage par friction entre des films thermoscellables :
- ) Les films sont chacun à multicouches, dont une couche interne de thermosoudage des films entre eux qui est intégrée à une couche externe pouvant être elle-même stratifiée en couches élémentaires, la couche externe conférant à l'emballage obtenu sa tenue naturelle en conformation.
- ) Les films sont maintenus superposés l'un sur l'autre au poste de soudage des films entre eux. La couche externe d'un premier film est orientée vers une tête de soudage et la couche externe d'un deuxième film repose sur un plateau ménagé par le bâti de la machine de thermosoudage des films entre eux. Autrement dit, les couches internes thermoscellables des films sont orientées l'une vers l'autre pour l'obtention du soudage des films entre eux, à contrario des couches externes qui sont orientées vers l'extérieur de l'emballage obtenu.
- ) la tête de soudage est équipée de l'outil rotatif et d'une motorisation d'entraînement en rotation de l'outil rotatif. La machine est équipée d'un manipulateur de la tête de soudage suivant les trois axes d'un repère orthonormé. L'outil rotatif est déplacé en application contre le premier film le long de sa trajectoire suivant un plan défini par deux desdits axes, le troisième axe identifiant la direction de mise en application axiale de l'outil rotatif contre la couche externe du premier film.

### EXPOSÉ DE L'INVENTION

Dans ce contexte, l'invention a pour objet un procédé de thermosoudage par friction entre deux films thermoscellables superposés et une machine à commande numérique de mise en œuvre dudit procédé, notamment à titre non exclusif pour la formation d'un emballage.

Les films sont soudés l'un à l'autre via des couches internes qu'ils comportent respectivement et qui sont thermoscellables l'une à l'autre à partir d'une friction opérée axialement par une face de l'extrémité distale d'un outil rotatif qui est appliquée contre une couche externe d'un premier desdits films et qui progresse le long d'une trajectoire qui est prédéfinie dans un plan et qui détermine une ligne de soudure des films entre eux.

La démarche de l'invention est fondée sur le constat que la technique de thermosoudage par friction et/ou par friction-malaxage entre les films présente plusieurs inconvénients et problèmes à résoudre qui sont exposés ci-après à titre indicatif non restrictif.

La technique de thermosoudage par friction et/ou par friction-malaxage est plutôt limitée au thermosoudage entre des films rigides, tel que par exemple à base de PET (Poly-téréphtalate d'éthylène). Ceci a pour conséquence de restreindre l'application potentielle de cette technique à d'autres matériaux dont les films pourraient être issus, notamment par exclusion d'un thermosoudage par friction entre des films issus d'autres matériaux connus plus souples et/ou plus fragiles, comme par exemple le PP (polypropylène) ou le PE (polyéthylène).

Une telle exclusion d'applications potentielles à d'autres matériaux est d'autant plus préjudiciable que l'évolution des techniques tend à développer de nouveaux matériaux plus souples et/ou plus fragiles, tels que notamment des matériaux recherchés biodégradables et/ou facilitant leur recyclage, notamment en ce qui concerne les emballages.

La technique de thermosoudage par friction et/ou par friction-malaxage est dépendante de nombreux paramètres à prendre en compte pour obtenir un soudage fiable et de qualité des films entre eux. De tels paramètres sont essentiellement relatifs aux matériaux dont sont issus les films, à la complexité de la trajectoire suivi par l'outil rotatif et par suite à la pertinence de la ligne de soudure obtenue, et/ou encore à la vitesse de rotation de l'outil rotatif générant l'échauffement par friction des films procurant la fusion de leur couche interne.

Or, les valeurs de ces différents paramètres influent sur la qualité de la soudure obtenue à partir de la régulation du fonctionnement de la machine par la commande numérique utilisée pour sa mise en œuvre. Une prise en compte inadaptée de ces paramètres et/ou une définition insuffisante voire même aléatoire ou subjective par un opérateur de leurs valeurs respectives, tendent à affecter la qualité du thermosoudage obtenu - notamment concernant l'obtention d'une ligne de soudure homogène et fiable - et à complexifier la tâche de l'opérateur pour programmer la commande numérique équipant la machine.

De tels inconvénients tendent à rendre rédhibitoire l'exploitation du thermosoudage par friction pour la formation d'emballages devant répondre à un cahier des charges précis et rigoureux, et/ou pour la formation d'emballages issus d'autres matériaux tels que précédemment visés, au détriment des avantages pourtant procurés par le thermosoudage par friction en ce qui concerne notamment la formation d'une ligne de soudure des films entre eux présentant une configuration pouvant être complexe.

Le déplacement de l'outil rotatif suivant une trajectoire plus ou moins complexe induit localement une variation de sa vitesse de déplacement le long de sa trajectoire.

Ceci a pour conséquence d'influer sur l'homogénéité de la ligne de soudure obtenue, voire encore de déliter localement la couche externe du premier film contre lequel l'outil rotatif est appliqué, notamment dans le cas d'application de la technique de thermosoudage par friction-malaxage.

Il en ressort une difficulté supplémentaire à surmonter pour pallier aux conséquences - délicates à contrôler - qui sont induites par les variations de la vitesse de déplacement de l'outil rotatif de long de sa trajectoire et qui peuvent localement provoquer une surchauffe des films qui leur est délétère ou inversement provoquer une soudure défectueuse des films entre eux. Idéalement, la chaleur produite par la friction de l'outil rotatif contre le premier film devrait demeurer sensiblement constante le long de sa trajectoire dans une plage de valeurs de température prédéfinie.

En outre, la technique de thermosoudage par friction et/ou par friction-malaxage affecte les cadences de production. Il en ressort que la vitesse de déplacement de l'outil rotatif le long de sa trajectoire est déterminante sur la durée nécessaire à l'obtention de l'emballage, de surcroît une durée encore plus conséquente par application de la technique de soudage par friction-malaxage.

Il est ainsi à relever qu'il est souhaitable d'éviter un thermosoudage des films par friction-malaxage, car il complexifie davantage la trajectoire suivie par l'outil rotatif et accroît le risque de dégradation des films, par suite des déplacements d'avance et de recul et/ou croisés successifs de l'outil rotatif le long de sa trajectoire délimitant la ligne de soudure obtenue des films entre eux.

Une autre difficulté à surmonter est que la température des films est significativement inférieure à celle de l'outil rotatif en aval de sa position suivant le sens de la progression de l'outil rotatif le long de sa trajectoire. Ceci a encore pour effet d'induire une variation de température de l'outil rotatif qui est refroidi au contact des films au fur et à mesure de sa progression, au risque encore d'affecter la qualité et/ou l'homogénéité de la ligne de soudure obtenue des films entre eux.

Une autre difficulté à surmonter est que l'outil rotatif étant axialement à surface de révolution, sa température intrinsèque varie depuis son axe de rotation vers sa périphérie. Ceci complexifie encore l'obtention d'un chauffage homogène des films à un point de soudure donné et par suite est susceptible d'affecter la qualité de la soudure obtenue le long de la ligne de soudure, notamment dans les zones à changement de direction de l'outil rotatif le long de sa trajectoire.

Sur la base du constat qui vient d'être présenté, un but de l'invention est de proposer un procédé et une machine à commande numérique de thermosoudage par friction entre des films thermoscellants qui permettent de remédier au moins aux inconvénients, problèmes et/ou difficultés qui viennent d'être exposés.

Un autre but de l'invention est de rendre compétitive la technique du thermosoudage par friction de films multicouches dont au moins les couches internes respectives des films à souder l'un à l'autre sont thermoscellables l'une à l'autre, au regard d'autres techniques connues plus compétitives mais au détriment des avantages que procure la technique du thermosoudage par friction.

De tels avantages de la technique du thermosoudage par friction concernent notamment la formation d'une ligne de soudure des films entre eux qui est potentiellement de configuration complexe et/ou la possibilité de modifier rapidement et aisément la configuration de la ligne de soudage, à contrario d'autres techniques de thermosoudage connues plus simples à mettre en œuvre - comme par exemple le thermosoudage via une barre chauffante - mais qui nécessitent un réaménagement spécifique du poste de soudage selon l'emballage à obtenir, ce qui est particulièrement préjudiciable dans le cas d'une production en série d'emballages en nombre limité.

Il est notamment visé par l'invention - à partir de l'exploitation d'un thermosoudage par friction via un outil rotatif déplacé le long d'une trajectoire plus ou moins complexe - de permettre un scellement le long d'une ligne de soudure entre des films thermoscellables qui procure au moins les avantages et/ou résultats techniques suivants, considérés isolément ou en combinaison au moins deux à deux :
- ) obtenir une soudure de qualité entre les films, qui soit homogène et fiable le long de la ligne de soudure scellant les films entre eux. Une telle ligne de soudure présente une configuration pouvant être plus ou moins complexe, pouvant notamment comporter des changements potentiellement fréquents et/ou brusques de directions dans le plan global de superposition des films.
- ) optimiser les applications potentielles du thermosoudage par friction à des films pouvant être sélectivement issus de nombreux différents matériaux, notamment à titre non exclusif au regard de leur structure physicochimique, de leur conductivité thermique - notamment en ce qui concerne la couche externe des films - de leur rigidité ou de leur souplesse, du cahier des charges d'un emballage à obtenir, et/ou encore de leur faculté à être biodégradables et/ou à être aisément recyclables après utilisation des emballages.
- ) optimiser les applications potentielles du thermosoudage par friction à des films multicouches dont les différentes couches peuvent être respectivement issues de matériaux différents ou issues d'un même matériau plus ou moins dense et/ou épais selon les couches, et cela sans affecter la qualité de la soudure obtenue entre les films et/ou en évitant une dégradation significative de leur couche externe.
- ) améliorer les cadences de production des emballages, et cela sans affecter la qualité et la fiabilité de la soudure obtenue entre les films, ni la possibilité d'obtenir une ligne de soudure des films entre eux de configuration complexe.
- ) proposer une Interface Homme-Machine (IHM) facilitant et simplifiant pour un opérateur - étant compris un opérateur humain - les modalités de paramétrage de la commande numérique de la machine régulant l'opération de thermosoudage, et le contrôle par la commande numérique de la machine et/ou par l'opérateur de la réalisation du thermosoudage opéré conformément au cahier des charges de l'emballage à obtenir.
- ) fiabiliser les modalités de mise en mobilité de l'outil rotatif le long de sa trajectoire procurant une ligne de soudure homogène et de qualité des films entre eux - sous contrôle de la commande numérique de la machine - et cela en facilitant la tâche de l'opérateur pour paramétrer à cet effet la commande numérique de la machine à partir de paramètres objectifs.
- ) collecter et transmettre à la commande numérique des informations fiables qui lui sont utiles pour réguler l'opération de thermosoudage conformément à un protocole rigoureux, et cela de préférence en évitant au mieux de complexifier structurellement les moyens mis en œuvre à cet effet et sans affecter leurs performances ni leur fiabilité.

Pour ce faire, et au regard du constat susvisé relevant de la démarche de l'invention, l'invention propose - sous contrôle de la commande numérique - d'identifier et de transmettre à un module de pilotage de la machine :
- ) une température de consigne de soudage des films entre eux déterminée selon des paramètres objectifs saisis par un opérateur tels que les caractéristiques des films à souder, à partir de laquelle la commande numérique détermine une vitesse de rotation de consigne de l'outil rotatif à appliquer,
- ) la configuration objective de la trajectoire de l'outil rotatif à suivre en application contre ledit premier film, qui est saisie par un opérateur et à partir de laquelle la commande numérique détermine au moins une cinématique et une dynamique de mise en mobilité de l'outil rotatif en rotation et suivant ladite trajectoire,
- ) préalablement à l'application de l'outil rotatif contre le premier film, préchauffer l'outil rotatif - via un moyen de chauffage annexe de l'outil rotatif - à une température initiale de consigne apte à provoquer une amorce de fusion de la couche interne des films. Il est compris que le préchauffage de l'outil rotatif est opéré préalablement à son application contre le premier film et est interrompu dès l'initiation du soudage des films entre eux en début de la trajectoire à suivre par l'outil rotatif entraîné à ladite vitesse de rotation de consigne. Puis,
- ) procéder au soudage par friction des films entre eux via l'outil rotatif, en mesurant et en transmettant à la commande numérique la température effective de l'outil rotatif mesurée en continu au point de contact axial entre l'outil rotatif et le premier film tout au le long de sa trajectoire, et adapter via la commande numérique prioritairement la vitesse de rotation de l'outil rotatif en prenant en compte au moins ladite température effective, conformément à l'obtention d'une température de chauffage des films sensiblement constante et conforme à ladite température de consigne de soudage le long de la trajectoire suivie par l'outil rotatif.

Une telle adaptation prioritaire de la vitesse de rotation de l'outil rotatif peut être temporairement insuffisante pour procurer une température de chauffage des films conforme à la température de consigne de soudage des films entre eux. Dans une telle situation, le moyen de chauffage annexe de l'outil rotatif peut être exploité en étant temporairement activé par la commande numérique, tant que la température effective de l'outil rotatif qui est mesurée en continu au point de contact axial entre l'outil rotatif et le premier film serait identifiée par la commande numérique inférieure à la température de consigne de soudage des films entre eux.

Le préchauffage de l'outil rotatif à la température initiale de consigne, préalablement à son application contre le premier film, permet notamment :
- ) d'éviter en début de l'opération de soudage des films entre eux, une perte de temps qui serait nécessaire pour élever par friction la température de l'outil rotatif appliqué contre le premier film à ladite température initiale de consigne. La cadence de production d'emballages successifs en est ainsi accrue. Il est aussi évité en phase initiale de soudage des films entre eux, une opération de friction et/ou de malaxage du premier film visant à élever en température l'outil rotatif à la température de consigne de soudage. La qualité obtenue de la soudure des films entre eux en est ainsi préservée, en limitant une friction à froid de l'outil rotatif contre le premier film en phase initiale de soudage des films entre eux.
- ) de certifier une amorce de soudure des films entre eux dès le point de départ de la trajectoire à suivre par l'outil rotatif afin de garantir l'obtention d'une ligne de soudure entre les films qui est homogène, fiable et de qualité dès le point de départ et tout au long du suivi de la trajectoire par l'outil rotatif.
- ) d'éviter une dégradation de la couche externe du premier film par l'outil rotatif le long d'un segment en début de sa trajectoire, qui résulterait du temps nécessaire à une montée en température de l'outil rotatif qui soit suffisante pour obtenir une fusion des couches internes des films à partir de sa seule friction en rotation contre le premier film. L'homogénéité de la qualité de la ligne de soudure en est encore confortée quels que soient le ou les matériaux dont sont issus les films et/ou quelle que soit la configuration potentiellement complexe de la ligne de soudure à obtenir.
- ) de pallier temporairement à un écart de température entre la température effective de l'outil rotatif mesurée et la température de consigne de soudage, qui serait notamment induite par une variation de la vitesse de rotation de l'outil rotatif requise par la commande numérique.

L'adaptation de la vitesse de rotation de l'outil rotatif par la commande numérique en fonction au moins de ladite température effective mesurée en temps réel au point de soudure courant - ou autrement dit la température effective mesurée en continu à un quelconque point de soudure pris en compte à un instant donné sur la trajectoire suivie par l'outil rotatif - permet encore de garantir l'obtention d'une ligne de soudure homogène entre les films. En outre, à partir d'une telle démarche d'adaptation de la vitesse de rotation de l'outil rotatif par la commande numérique, des valeurs d'autres paramètres peuvent être corrélées avec ladite température effective pour adapter la vitesse de rotation de l'outil rotatif, tel que visé ci-après.

Il est à cet effet proposé par l'invention que l'adaptation de la vitesse de rotation de l'outil rotatif par la commande numérique prenne aussi en compte le diamètre de l'outil rotatif, la dynamique de l'outil rotatif, et/ou encore localement la température intrinsèque des films préalable à leur chauffage progressivement par l'outil rotatif le long de sa trajectoire, ou autrement dit la température intrinsèque des films en aval immédiat - suivant la trajectoire suivie par l'outil rotatif - du point de friction axial de l'outil rotatif contre le premier film.

La mesure en continu de la température effective de l'outil rotatif au point de contact axial entre l'outil rotatif et le premier film, procure l'obtention d'une soudure homogène des films entre eux le long de la ligne de soudure en tenant compte - selon le diamètre de l'outil - d'une variation de température entre ledit point de contact axial et la périphérie diamétrale de l'outil rotatif. Autrement dit, la température de l'outil rotatif variant typiquement entre son centre et sa périphérie, ladite température effective de l'outil rotatif est avantageusement mesurée suivant son centre défini par son axe de rotation tel que visé plus loin. La température de consigne de soudage est ainsi déterminée en fonction du diamètre de l'outil en tenant compte de la variation de sa température entre son centre et sa périphérie.

Ceci permet de garantir l'obtention d'une soudure homogène entre les films suivant la totalité de la trajectoire suivie par l'outil rotatif, et cela en priorisant la vitesse d'avancement de l'outil rotatif le long de sa trajectoire nonobstant une variation de la largeur de la ligne de soudure obtenue qui serait notamment induite par un changement de direction de ladite trajectoire.

Plus spécifiquement concernant la prise en compte de la dynamique de l'outil rotatif, celle-ci est considérée au regard de la vitesse de déplacement de l'outil rotatif suivant ladite trajectoire et/ou au regard de la pression exercée par l'outil rotatif contre le premier film, qui sont avantageusement priorisées à valeur constante par la commande numérique, et cela sans affecter :
- ) l'obtention d'une température de soudage conforme à la température de consigne de soudage suivant la totalité de la trajectoire suivie par l'outil, y compris en cas de changement de direction de la trajectoire suivie par l'outil rotatif, et/ou,
- ) l'obtention d'une qualité de soudure homogène entre les films le long de la ligne de soudure par prise en compte du diamètre de l'outil rotatif dont l'application contre les films tout le long de sa trajectoire est déterminée par la commande numérique à pression constante.

La priorisation de la vitesse de déplacement de l'outil rotatif et de la pression exercée par l'outil rotatif contre les films suivant ladite trajectoire permet d'optimiser en priorité la vitesse de déplacement de l'outil rotatif et ainsi permet d'accroître les cadences de production d'emballages successifs.

Ceci est procuré sans affecter la qualité de la ligne de soudure obtenue, à partir du chauffage par friction des films à température constante conformément à la température de consigne de soudage, en faisant varier à cet effet prioritairement la vitesse de rotation de l'outil rotatif appliqué contre les films - et subsidiairement tel que précédemment visé en activant au besoin temporairement le moyen de chauffage annexe de l'outil rotatif en cas d'une requête en accélération de l'outil rotatif - et cela en prenant en compte au moins la température effective de l'outil rotatif mesurée axialement en continu.

**Par** ailleurs concernant la température intrinsèque des films, il est proposé par l'invention d'interposer un support, de préférence souple, entre le deuxième film et le plateau du bâti sur lequel sont installés les films superposés. Le support est équipé d'un organe de chauffage - tel qu'une plaque chauffante par exemple - pour chauffer les films à un seuil de température.

**Ledit** seuil de température est déterminé par la commande numérique en fonction au moins des caractéristiques physicochimiques des films pour limiter l'amplitude d'éventuels chocs thermiques entre l'outil rotatif et les films le long de la trajectoire suivie par l'outil rotatif, et/ou pour favoriser une soudure homogène des films entre eux sur la totalité de la ligne de soudure obtenue.

Ceci favorise un soudage de qualité entre les films qui peuvent être issus de divers matériaux - y compris notamment des matériaux recyclables ou biodégradables - et/ou indépendamment des conditions de l'environnement ambiant lors de l'opération de soudage. Ceci favorise aussi une augmentation de la cadence de production des emballages par augmentation de la vitesse priorisée constante de déplacement de l'outil le long de sa trajectoire.

Le chauffage des films au seuil de température - via ledit support - est placé sous contrôle de l'activation de l'organe de chauffage par la commande numérique durant la période de soudage des films entre eux, à un seuil de température d'une valeur potentiellement variable et calculée par la commande numérique au plus proche de la température de consigne de soudage tout en restant inférieure à la température de fusion des couches externes des films.

Ceci permet de réduire la différence de température entre le point de contact axial courant de l'outil rotatif et le point de contact axial situé en aval dudit point de contact axial courant suivant la trajectoire suivie par l'outil rotatif, et par suite d'optimiser encore la vitesse de déplacement de l'outil rotatif le long de sa trajectoire et d'accroître la cadence obtenue de production des emballages, et cela sans affecter la qualité et la fiabilité de la ligne de soudure obtenue conformément au cahier des charges d'un quelconque emballage à obtenir.

Par ailleurs, l'invention propose d'exploiter un modèle de calcul pour déterminer les valeurs de l'ensemble des paramètres intervenant dans le pilotage par la machine de l'opération de soudage des films entre eux, via la commande numérique. Le modèle de calcul est interfacé entre un organe de saisie de données d'entrée par l'opérateur et - au moins - un module de pilotage de la machine par la commande numérique.

A partir des données d'entrée - qui selon l'invention sont choisies en nombre au mieux limité et dont les valeurs objectives sont aisément identifiées par un opérateur - le modèle de calcul génère par calcul des données de sortie qui sont alors sélectivement exploitées soit directement par le module de pilotage soit par un module de régulation de la température de préchauffage de l'outil rotatif et de la vitesse de rotation variable de l'outil rotatif.

Plus spécifiquement, les données d'entrée objectives saisies par l'opérateur et transmises au modèle de calcul sont notamment au moins limitées à :
- ) des premières données d'entrée relatives au matériau dont sont respectivement issues les couches composant les films à souder, l'épaisseur des films ou tout au moins celle de la couche externe du premier film contre lequel l'outil rotatif est prévu d'être appliqué, et le diamètre de l'outil rotatif.
- ) des deuxièmes données d'entrée relatives à la trajectoire à suivre par l'outil rotatif en application contre la couche externe du premier film, notamment par identification de la position de nœuds de la trajectoire indiquant un changement de direction de la progression de l'outil et/ou par identification de la géométrie d'au moins un segment de la trajectoire entre des nœuds successifs.

A partir des données d'entrée objectives saisies par l'opérateur - c'est à dire excluant toutes données estimatives ou de calcul par l'opérateur humain, le modèle de calcul détermine des données de sortie relatives au moins à :
- ) une température de consigne de soudage, correspondante à la température à atteindre par l'outil rotatif au point de contact contre la couche externe du premier film, et une vitesse de rotation nominale de l'outil rotatif à appliquer pour chauffer la couche externe du premier film à une température procurant une fusion des couches internes des films,
- ) la pression à exercer - de préférence à valeur constante - par l'outil rotatif contre la couche externe du premier film, et
- ) la trajectoire à suivre par l'outil rotatif à une vitesse de déplacement optimisée - de préférence à valeur constante - de l'outil rotatif le long de sa trajectoire.

Le module de pilotage exploite directement les données de sortie fournies en continu par le modèle de calcul qui sont relatives à la trajectoire à suivre par l'outil rotatif, à la pression à exercer par l'outil rotatif contre la couche externe du premier film le long de sa trajectoire et à la vitesse de déplacement de l'outil rotatif le long de sa trajectoire. De telles données de sortie sont dès lors priorisées.

Par ailleurs le module de régulation - interfacé entre le modèle de calcul et le module de pilotage - régule :
- ) ladite température initiale de consigne de préchauffage de l'outil rotatif à appliquer, au moins à partir de la température de consigne de soudage, et
- ) la vitesse de rotation effective de l'outil rotatif à appliquer le long de sa trajectoire
- pour rappel potentiellement variable - à partir de la température de consigne de soudage et de la vitesse de rotation nominale de l'outil rotatif à appliquer. La vitesse de rotation effective de l'outil rotatif à appliquer est corrigée par le module de régulation en fonction de la température effective de l'outil rotatif mesurée en continu le long de sa trajectoire, axialement au centre de sa face plane d'application contre le premier film.

La température intrinsèque des films hors zone d'application de l'outil rotatif contre le premier film est potentiellement prise en compte par la commande numérique en aval - suivant le sens de déplacement de l'outil rotatif le long de sa trajectoire - de la zone de contact courant de l'outil rotatif contre le premier film, à partir :
- ) d'une prise en compte de la température ambiante au poste de soudage mesurée via une sonde de température annexe, de préférence au plus proche de la couche externe du premier film voire au contact de la couche externe du premier film hors de la zone du premier film situé dans le périmètre de la trajectoire suivie par l'outil rotatif, et/ou
- ) le cas échéant à partir de la température de chauffage dudit support qui est contrôlée par le module de régulation selon les conditions qui ont été énoncées.

Les régulations de la température initiale de consigne à appliquer et de la vitesse de rotation effective de l'outil rotatif à appliquer, sont de préférence respectivement effectuées par des régulateurs distincts du module de régulation, à partir des données de sortie générées par le calculateur qui sont transmises au module de régulation. Les valeurs calculées respectivement par le modèle de calcul et par les différents régulateurs du module de régulation sont notamment itérativement calculées et corrélées entre elles pour identifier les limites du domaine du thermosoudage à effectuer.

Le domaine du thermosoudage à effectuer est ainsi défini par les valeurs des différents paramètres à prendre en compte suivant la totalité de la trajectoire suivie par l'outil rotatif, qui sont identifiées par le modèle de calcul à partir des données d'entrée et qui sont sélectivement soit traitées par le module de régulation soit directement transmises au module de pilotage tel que précédemment visé.

Plus particulièrement, le domaine du thermosoudage est borné entre des limites relevant au moins :
- ) de la valeur maximale de la température initiale de consigne,
- ) de la valeur maximale de la température de l'outil rotatif appliqué sous pression priorisée constante contre la couche externe du premier film. La pression appliquée à valeur constante de l'outil rotatif contre le premier film permet de limiter sa dégradation et/ou d'éviter des variations de forme le long de la ligne de soudure de l'emballage obtenu,
- ) de la plage de valeurs admissibles de la vitesse de rotation de l'outil rotatif qui est variable le long de la trajectoire de l'outil rotatif en fonction de la température effective de l'outil rotatif mesurée axialement en continu le long de sa trajectoire,
- ) de la valeur priorisée de la vitesse de déplacement optimisée de l'outil rotatif le long de la trajectoire et de la valeur de la pression - priorisée à valeur constante - appliquée par l'outil rotatif contre la couche externe du premier film.

L'invention propose aussi une machine à commande numérique de thermosoudage par friction desdits films entre eux, conformément au procédé relevant de l'invention qui vient d'être décrit. La machine comporte au moins :
- ) une tête de soudage qui est munie dudit outil rotatif, l'extrémité proximale de l'outil rotatif comportant un arbre d'entraînement en rotation par une motorisation montée sur la tête de soudage, l'extrémité distale de l'outil rotatif étant orientée vers les films à souder entre eux, et
- ) un manipulateur de déplacement de la tête de soudage suivant les trois axes d'un repère orthonormé, l'outil rotatif étant appliqué suivant l'un quelconque des axes par le manipulateur contre la face externe dudit premier film et étant déplacé suivant sa trajectoire suivant un plan défini par les deux autres axes dudit repère orthonormé.

**Au** moins les mises en œuvre de la motorisation d'entraînement en rotation de l'outil rotatif et du manipulateur déplaçant la tête de soudage - dont notamment pour appliquer l'outil rotatif contre les films et pour le déplacer suivant sa trajectoire
- sont placées sous la dépendance d'ordres de commande générés par un module de pilotage sous contrôle de la commande numérique, dont la mise en œuvre est placée sous la dépendance de consignes générées par un système de calcul à partir de la saisie de données d'entrée objectives par un opérateur.

L'outil rotatif est équipé :
- ) d'un dit moyen de chauffage annexe - étant compris complémentaire au chauffage par friction de l'outil rotatif appliqué contre la couche externe du premier film - dont l'activation est régulée par la commande numérique, notamment via le module de régulation,
- ) d'un capteur de température qui s'étend à l'intérieur d'un canal ménagé axialement à l'intérieur de l'outil rotatif, équipé à son extrémité distale d'une sonde de température qui est placée à l'intérieur du canal à proximité de l'extrémité distale de l'outil rotatif en son centre identifié par son axe de rotation.

La tête de soudage est équipée d'une carte électronique avantageusement autonome en énergie, via notamment une réserve d'énergie dont elle est porteuse. La carte électronique :
- ) collecte des informations au moins relatives à une information de température détectée par ledit capteur de température et à une information de la dynamique en rotation de l'outil rotatif détectée par exemple par un accéléromètre équipant la tête de soudage. L'accéléromètre peut notamment être installé sur l'outil rotatif, sur un arbre motorisé d'entraînement en rotation de l'outil rotatif, ou sur la motorisation de mise en rotation dudit arbre d'entraînement,
- ) est équipée d'un dispositif d'émission/réception par ondes d'informations, qui peut aussi selon une variante être installé sur le châssis de la tête de soudage - via lequel les informations collectées par la carte électronique peuvent être transmises au moins à la commande numérique équipant la machine.

La carte électronique est de préférence installée sur l'arbre d'entraînement, à son extrémité proximale émergente hors de la motorisation qui est opposée à son extrémité proximale via laquelle l'outil rotatif est entraîné en rotation. Pour si besoin préciser les notions relatives proximale et distale appliquées à la définition structurelle de l'outil rotatif et de la tête de soudage et/ou de ses équipements, l'extrémité distale de l'outil rotatif est orientée vers les films et son extrémité proximale est orientée vers la motorisation de son entraînement en rotation.

Un tel agencement de la tête de soudage et de ses équipements permet, à partir de moyens de structure simples et peu encombrants :
- ) de contrôler aisément en continu au moins la température effective de l'outil rotatif au point de contact axial contre la couche externe du premier film et/ou la vitesse de rotation effective de l'outil rotatif, et
- ) de la transmettre à la commande numérique qui contrôle - à partir au moins des données objectives transmises par la carte électronique - l'opération de thermosoudage des films conformément au protocole tel qu'il vient d'être décrit selon le procédé relevant de l'invention.

Le moyen de chauffage annexe est avantageusement formé d'un corps métallique à très faible coefficient de dilatation que comporte l'outil rotatif à son extrémité distale prévue d'être appliquée contre la couche externe du premier film, et d'un dispositif de chauffage par induction dudit corps métallique.

Subsidiairement, un détecteur de vibrations installé sur la tête de soudage permet d'identifier un éventuel balourd en rotation de l'outil rotatif. Un tel balourd est à éviter et tout au moins est susceptible d'altérer la rigueur de la ligne de soudure obtenue entre les films et/ou l'homogénéité de la chaleur transmise par friction à la couche externe du premier film. En cas d'une détection d'un tel balourd à un seuil de vibrations prédéfini, un signal d'alerte peut alors être émis à partir d'une information collectée et transmise par la carte électronique à un générateur d'alerte sonore et/ou visuelle par exemple.

La commande numérique de la machine de thermosoudage est équipée d'un organe de saisie de données d'entrée par un opérateur et d'un système de calcul comportant au moins ledit modèle de calcul et ledit module de régulation. Le système de calcul est interfacé entre ledit organe de saisie et ledit module de pilotage de la machine équipant la commande numérique. Le modèle de calcul est interfacé entre ledit organe de saisie et ledit organe de régulation.

**Au** titre de ce qui précède, l'invention a pour objet un procédé de thermosoudage par friction via un outil rotatif entre deux films thermoscellants superposés, dont un premier film et un deuxième film. Les films comportent chacun une couche externe et une couche interne thermoscellante.

Selon un tel procédé :
- ) les films sont installés superposés sur un plateau équipant une machine à commande numérique de thermosoudage par friction des films entre eux, les couches internes des films étant orientées l'une vers l'autre en position de thermosoudage des films entre eux. La couche externe du deuxième film est orientée vers le plateau et la couche externe du premier film est orientée vers une tête de soudage porteuse de l'outil rotatif et d'une motorisation d'entraînement en rotation de l'outil rotatif.
- ) un opérateur saisit des données d'entrée relatives au moins aux caractéristiques structurelles des films et à une trajectoire à suivre par l'outil rotatif en application axiale contre la couche externe du premier film.

A partir desdites données d'entrée et sous dépendance de données d'instructions transmises par la commande numérique à un module de pilotage, le module de pilotage - étant compris un module de pilotage au moins de la mise en œuvre de la tête de soudage - génère des ordres de commande au moins relatifs d'une part à un entraînement de l'outil rotatif à une vitesse de rotation de consigne, et d'autre part à un déplacement de la tête de soudage selon une cinématique et une dynamique de déplacement de l'outil rotatif suivant ladite trajectoire, conformément à l'obtention d'une température de consigne de soudage des films entre eux.

Dans ce contexte selon l'invention, un tel procédé comporte au moins les opérations suivantes :
- ) préalablement à l'application de l'outil rotatif contre le premier film et sous contrôle d'un système de calcul équipant de la commande numérique, préchauffer l'outil rotatif par un moyen de chauffage annexe. L'outil rotatif est préchauffé à une température initiale de consigne - étant compris identifiée par le système de calcul - apte à provoquer une amorce de fusion de la couche interne des films, puis,
- ) le préchauffage de l'outil rotatif étant interrompu, procéder au soudage par friction des films entre eux via l'outil rotatif, en mesurant et en transmettant audit système de calcul la température effective mesurée en continu au point de contact axial contre le premier film de l'outil rotatif le long du suivi de sa trajectoire, et en régulant via ledit système de calcul la vitesse de rotation de l'outil rotatif en prenant en compte au moins ladite température effective mesurée, conformément à l'obtention le long de ladite trajectoire d'une température de chauffage des films conforme à ladite température de consigne de soudage.

Il est compris que :
- ) la vitesse de rotation de l'outil rotatif est régulée à vitesse variable le long de la trajectoire suivie par l'outil rotatif, en fonction au moins de ladite température effective de l'outil rotatif mesurée axialement en son centre audit point de contact axial contre le premier film, et cela conformément au maintien par friction de la température sensiblement constante de l'outil rotatif à la température de consigne de soudage, et
- ) L'outil rotatif est préchauffé à la température initiale de consigne préalablement à son application contre le premier film, puis la vitesse de rotation de l'outil rotatif est régulée par le système de calcul selon la température de consigne de soudage à atteindre par friction de l'outil rotatif contre la couche externe du premier film, à partir au moins de ladite mesure en continu de l'outil rotatif au point de contact axial de l'outil rotatif contre le premier film,

**Des** spécificités et des caractéristiques supplémentaires d'un procédé relevant de l'invention sont exposées ci-après.

La régulation de la vitesse de rotation de l'outil rotatif par le système de calcul prend aussi en compte l'un quelconque au moins des paramètres suivants :
- ) le diamètre de l'outil rotatif,
- ) la dynamique de mise en rotation de l'outil rotatif, en fonction de la vitesse de déplacement de l'outil rotatif suivant ladite trajectoire et de la pression exercée par l'outil rotatif contre le premier film,
- ) la température intrinsèque des films mesurée en continu au point de contact axial de l'outil rotatif contre le premier film, via le capteur de température dont il est équipé tel que visé plus loin.

Les valeurs respectives de la vitesse de déplacement de l'outil rotatif suivant ladite trajectoire et de la pression exercée par l'outil rotatif contre la couche externe du premier film sont priorisées à valeurs constantes. La température de soudage des films est adaptée par variation de la vitesse de rotation de l'outil rotatif conformément à l'obtention de la température de consigne de soudage maintenue constante suivant la totalité de la trajectoire suivie par l'outil rotatif.

Il est compris - tel que précédemment visé - que marginalement suite à une variation commandée de la vitesse de rotation de l'outil rotatif - notamment en accélération - le moyen de chauffage annexe normalement inactivé lors de l'opération de soudage, peut temporairement être activé par le système de calcul lors de l'opération de soudage pour suppléer dans ce cas une déficience de montée de température de l'outil rotatif.

Une telle déficience de montée de température de l'outil rotatif est identifiée par le système de calcul à partir de ladite température effective mesurée en continu au point de contact axial entre le premier film et l'outil rotatif le long du suivi de sa trajectoire, qui est par exemple comparée en continu à une plage de températures admises de l'outil rotatif. A partir d'une telle comparaison, le système de calcul identifie une insuffisance de montée en température de l'outil rotatif et provoque dans ce cas une activation temporaire du moyen de chauffage annexe.

Le procédé comporte - durant la période de soudage des films entre eux et sous contrôle du système de calcul - une opération de chauffage d'un support interposé entre le deuxième film et le plateau sur lequel reposent les films superposés. Le support chauffé élève en température les films superposés à un seuil de température dont la valeur maximale est au plus proche de la température de consigne de soudage tout en restant inférieure à la température de fusion des couches externes des films.

Autrement dit, la différence entre d'une part la température de la couche externe du premier film au point de contact axial - dit aussi point axial de friction - de l'outil rotatif appliqué contre celle-ci et d'autre part la température intrinsèque des films issue de leur chauffage par le support est au mieux minimisée.

**Un** modèle de calcul mis en œuvre par un calculateur que comporte le système de calcul, détermine des données de sortie à partir desdites données d'entrée. Les données d'entrée comprennent en outre au moins le diamètre de l'outil rotatif. Les données de sortie comprennent au moins la trajectoire à suivre par l'outil rotatif, la vitesse de déplacement de l'outil rotatif, la pression exercée par l'outil rotatif contre le premier film, une vitesse de rotation nominale de l'outil rotatif et la température de consigne de soudage des films entre eux.

**Au** moins les données de sortie relatives à la vitesse de déplacement de l'outil rotatif et à la pression exercée par l'outil rotatif contre le premier film sont priorisées en étant directement transmises et exploitées par ledit module de pilotage. Le système de calcul régule via un module de régulation qu'il comporte les valeurs suivantes transmises au module de pilotage :
- ) ladite température initiale de consigne à partir au moins de la donnée de sortie relative à la température de consigne de soudage, et
- ) la vitesse de rotation effective de l'outil rotatif à appliquer par le module de pilotage, à partir de la donnée de sortie relative à la vitesse de rotation nominale de l'outil rotatif, de la donnée de sortie relative à la température de consigne de soudage et de la température effective de l'outil rotatif mesurée en continu au point de contact axial entre le premier film et l'outil rotatif le long de sa trajectoire.

Il est si besoin précisé et compris que le point de contact axial entre l'outil rotatif et le premier film est identifié comme étant le point de contact de l'outil rotatif situé suivant son axe d'extension au centre de la face de bout plane de l'outil rotatif qui est appliquée contre le premier film. Ceci, tel que visé plus loin, en raison de la présence du capteur de température qui est logé à l'intérieur du canal axial s'étendant à l'intérieur de l'outil rotatif et dont la sonde de température est placée à proximité de la face de bout plane de l'outil rotatif.

Ledit seuil de température des films superposés chauffés via le support est calculé par un organe de calcul à partir de la donnée de sortie relative à la température de consigne de soudage. Ledit seuil de température calculé inférieur à température de consigne de soudage est alors transmis par module de pilotage contrôlant l'activation d'un organe de chauffage du support.

Les données d'entrée se rapportent au moins aux matériaux dont sont respectivement issus les films, à l'épaisseur des films, au diamètre de l'outil rotatif, et à la trajectoire à suivre par l'outil rotatif.

De telles données d'entrées sont ainsi choisies limitées à des données à valeurs objectives saisies par un opérateur humain. Autrement dit, les données d'entrée sont limitées à des données objectives excluant toute subjectivité de l'opérateur, ni ne nécessitant de la part de l'opérateur préalablement à leur saisie un calcul ou une référence à un abaque - ou autre un outil analogue - ce qui facilite la tâche de l'opérateur lors de la saisie des données d'entrée.

Il est aussi compris que les couches de l'un au moins des films peuvent être issues de matériaux différenciés ou d'être issues d'un même matériau, les couches dans ce dernier cas pouvant être différenciées selon leur épaisseur et/ou selon leur densité par exemple.

Les données de sortie issues du calcul opéré par le modèle de calcul se rapportent au moins à la trajectoire à suivre par l'outil rotatif, à la température de consigne de soudage, à une vitesse de rotation nominale de l'outil rotatif, à la pression à exercer contre la couche externe du premier film par l'outil rotatif le long de sa trajectoire et à une vitesse de déplacement optimisée de l'outil rotatif le long de sa trajectoire.

Le module de régulation régule au moins :
- ) la température initiale de consigne à appliquer à partir de la température de consigne de soudage et de la différence de température de la couche externe du premier film entre le point de contact axial courant de l'outil rotatif et un point de contact axial aval de l'outil rotatif suivant le sens de déplacement de l'outil rotatif le long de sa trajectoire, et
- ) la vitesse de rotation effective de l'outil rotatif à appliquer à partir de la température de consigne de soudage et de la vitesse de rotation nominale de l'outil rotatif. La régulation de la vitesse de rotation effective de l'outil rotatif est corrigée par ledit système de calcul équipant la commande numérique au moins en fonction de la température effective de l'outil rotatif mesurée en continu au point de contact axial entre le premier film et l'outil rotatif le long de sa trajectoire.

Les données de sortie issues du calcul opéré par le modèle de calcul d'une part et les régulations opérées par ledit module de régulation d'autre part, sont itérativement calculées et corrélées entre elles pour identifier les limites du domaine de soudage. Il est compris par domaine de soudage la plage admissible de valeurs conditionnant les valeurs des paramètres de fonctionnement de la machine à appliquer par le module de pilotage pour réaliser le thermosoudage entre les films.

L'invention a aussi pour objet une machine à commande numérique de thermosoudage par friction via un outil rotatif entre deux films thermoscellants superposés. La machine à commande numérique de l'invention est organisée pour la mise en œuvre d'un procédé de thermosoudage tel qu'il vient d'être décrit.

La machine est du type de machine au moins équipée :
- ) d'un dit plateau d'installation desdits films superposés,
- ) d'une dite tête de soudage porteuse de l'outil rotatif et d'une dite motorisation d'entraînement en rotation de l'outil rotatif,
- ) d'un dit manipulateur de déplacement de la tête de soudage suivant les trois axes d'un repère orthonormé, dont deux axes définissent un plan de superposition des films et dont le troisième axe définit la direction d'application axiale de l'outil rotatif contre les films superposés,
- ) de ladite commande numérique au moins équipée d'un dit organe de saisie par un opérateur de dites données d'entrée, d'un dit système de calcul générant à partir des données d'entrée des consignes exploitées par un dit module de pilotage qui génère de dits ordres de commande relatifs au moins à une mise en rotation de l'outil rotatif à une dite vitesse de rotation de consigne et à un dit déplacement de la tête de soudage.

Le déplacement de la tête de soudage est notamment commandé par le module de pilotage selon une cinématique et une dynamique de déplacement de l'outil rotatif suivant une trajectoire prédéfinie, conformément à l'obtention au moins d'une dite température de consigne de soudage des films entre eux étant compris suivant la trajectoire suivie par l'outil rotatif appliqué contre le premier film.

Dans ce contexte selon une machine conforme à l'invention, la machine est équipée :
- ) d'un dit moyen de chauffage annexe de l'outil rotatif à ladite température initiale de consigne dont l'activation est régulée par le système de calcul équipant la commande numérique. Le moyen de chauffage annexe est avantageusement du type à induction chauffant un corps métallique que comporte l'outil rotatif à son extrémité distale, via lequel corps métallique l'outil rotatif est appliqué contre la couche externe du premier film.
- ) d'un capteur de température disposé à l'intérieur d'un canal axial que comporte l'outil rotatif, l'extrémité distale du capteur de température étant placée à l'intérieur du canal à proximité de la face de bout de l'outil rotatif via laquelle l'outil rotatif est appliqué axialement contre la couche externe du premier film.

Cette machine présente en outre le système de calcul qui est configuré pour :
- préalablement à l'application de l'outil rotatif contre le premier film, faire préchauffer l'outil rotatif par le moyen de chauffage annexe, à une température initiale de consigne apte à provoquer une amorce de fusion de la couche interne (5b, 6b) des films, puis
- interrompre le préchauffage de l'outil rotatif, et, pendant le soudage par friction des films entre eux via l'outil rotatif, réguler la vitesse de rotation de l'outil rotatif (9) en prenant en compte au moins une température effective mesurée, conformément à l'obtention le long de ladite trajectoire d'une température de chauffage des films conforme à ladite température de consigne de soudage, la température effective correspondant à une température mesurée en continu au point de contact axial contre le premier film de l'outil rotatif le long du suivi de sa trajectoire.

Des spécificités et des caractéristiques supplémentaires d'une machine relevant de l'invention sont exposées ci-après.

La tête de soudage est équipée d'une carte électronique de collecte d'informations au moins relatives à la température détectée par le capteur de température et à la dynamique en rotation de l'outil rotatif détectée par un accéléromètre. La carte électronique est équipée au moins d'un dispositif de communication par ondes via lequel la carte électronique transmet au moins au système de calcul les informations collectées par la carte électronique.

Ledit moyen de chauffage annexe est formé d'un corps métallique que comporte l'outil rotatif à son extrémité distale d'application axiale contre le premier film et d'un dispositif de chauffage du corps métallique qui est monté sur la tête de soudage. Le dispositif de chauffage est avantageusement du type à chauffage par induction électromagnétique via une bobine inductive entourant à faible distance radiale le corps métallique.

Le corps métallique est de préférence issu d'un matériau à très faible coefficient de dilatation, tel que de préférence à base d'un alliage de fer et de nickel (INVAR). Le corps métallique est monté à l'extrémité distale d'un corps proximal que comporte l'outil rotatif, qui est de préférence issu d'un matériau thermiquement isolant, tel que le polyétheréthercétone (PEEK).

La machine est équipée d'un dit support d'interposition entre ledit plateau et ledit deuxième film, via lequel les films superposés sont soutenus par le plateau. Le support, de préférence souple, est équipé d'un organe de chauffage dont l'activation par le module de pilotage est placée sous la dépendance du système de calcul équipant la commande numérique.

Le système de calcul comporte un dit calculateur de mise en œuvre dudit modèle de calcul. Le calculateur est interfacé entre l'organe de saisie et ledit module de régulation que comporte le système de calcul.

Le module de régulation est composé d'au moins deux régulateurs distincts, dont :
- ) un premier régulateur déterminant la température initiale de consigne du moyen de chauffage annexe de l'outil rotatif à partir de la température de consigne de soudage, et
- ) un deuxième régulateur de la vitesse de rotation effective de l'outil rotatif à appliquer, à partir de ladite vitesse de rotation nominale, de la température de consigne de soudage et de ladite température effective de l'outil rotatif mesurée en continu par le capteur de température dont il est équipé.

La tête de soudage est potentiellement équipée d'un capteur de vibrations auquel l'outil rotatif est soumis. L'activation d'un générateur d'un signal d'alerte est placée sous la dépendance du capteur de vibrations, en étant calibrée à un seuil prédéfini de la fréquence et/ou de l'amplitude maximales tolérées des vibrations mesurées par le capteur de vibrations.

**Au** moins le capteur de vibrations et/ou subsidiairement le générateur d'alerte peuvent être montés sur ladite carte électronique, ladite alerte générée pouvant être transmise par ondes via la carte électronique à un organe émetteur d'une alerte équipant la machine.

### PRÉSENTATION DES FIGURES

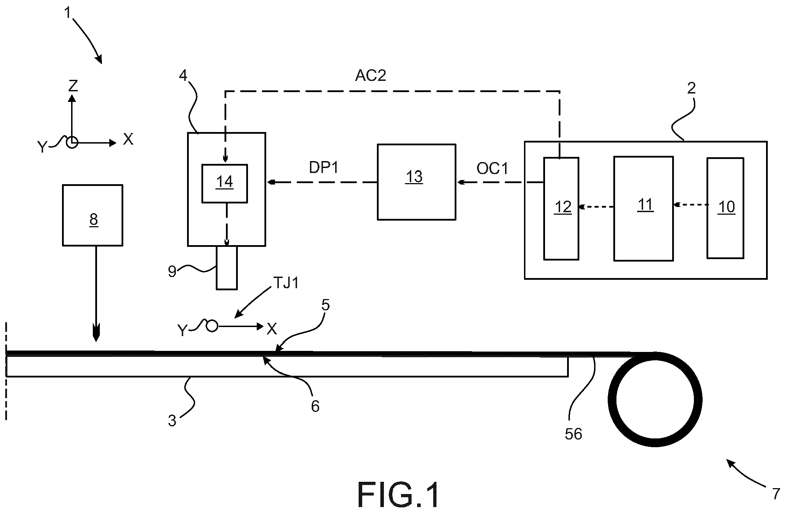

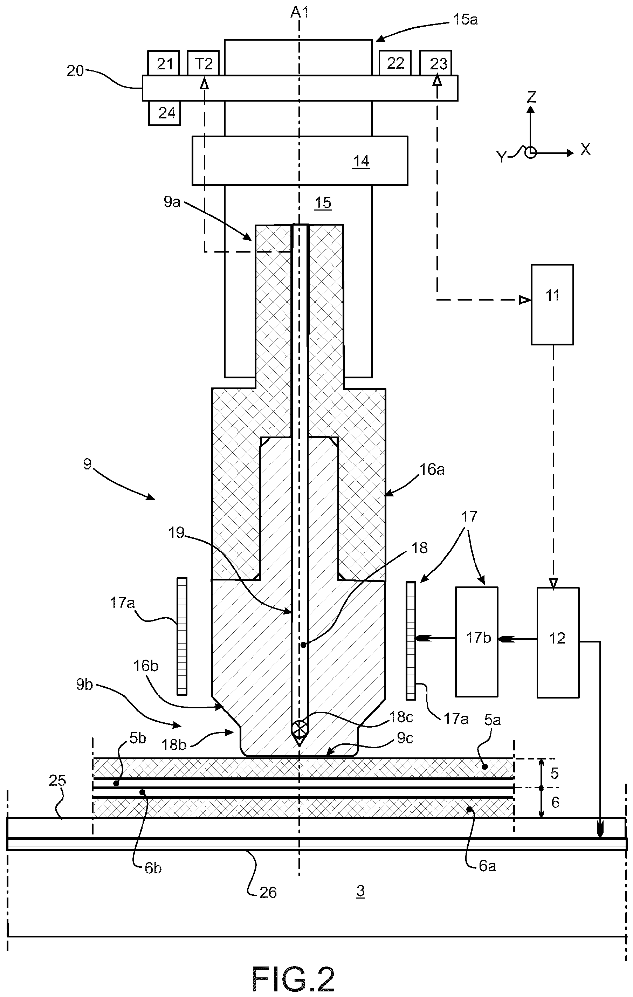

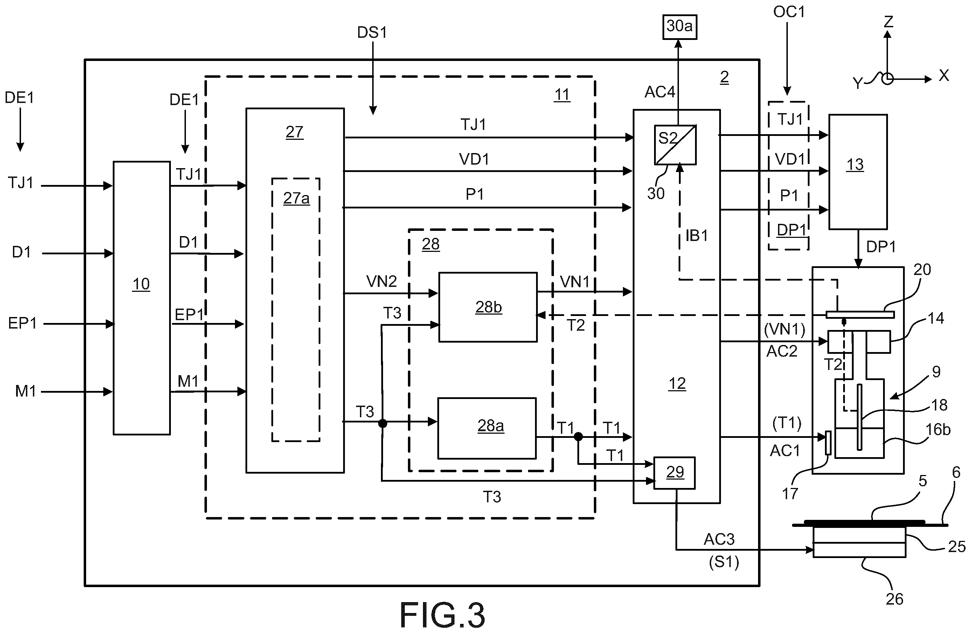

L'invention sera mieux comprise à la lecture de la description détaillée qui suit d'un exemple de réalisation de l'invention, en relation avec les figures suivantes des planches annexées :
- ) la figure 1 (FIG.1) est une représentation schématique d'une machine à commande numérique de thermosoudage par friction entre deux films superposés relevant de la présente invention, qui est illustrée et commentée synthétiquement afin de présenter le contexte de l'invention.
- ) la figure 2 (FIG.2) est une illustration schématique en coupe axiale d'un exemple de réalisation d'un outil rotatif relevant de l'invention, équipant une machine de thermosoudage par friction entre deux films thermoscellants superposés conforme à l'invention. Sur la figure 2, l'outil rotatif est représenté en position d'application contre une couche externe de l'un desdits films - dit premier - et des modalités de sa mise en œuvre sont schématiquement illustrées.
- ) la figure 3 (FIG.3) est un schéma logique illustrant synthétiquement un exemple de mise en œuvre globale d'un procédé de thermosoudage par friction entre deux dits films thermoscellants conforme à l'invention. Il est essentiellement illustré sur la figure 3 les modalités de mise en œuvre d'une machine à commande numérique relevant de l'invention, pour opérer un thermosoudage par friction entre deux dits films thermoscellants.

### DESCRIPTION DÉTAILLÉE

Les figures et leur description détaillée non limitative, exposent l'invention selon des modalités particulières qui ne sont pas restrictives quant à la portée de l'invention.

Les figures et leur description détaillée peuvent servir à mieux appréhender et définir l'invention, si besoin en relation avec la description générale qui vient d'en être faite. Par ailleurs pour éviter une surcharge des figures et ainsi faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

Sur la figure 1, il est schématiquement et synthétiquement représenté un exemple d'une machine 1 à commande numérique 2 organisée pour former successivement des emballages pas à pas. La machine 1 s'étend suivant les trois axes X, Y et Z d'un repère orthonormé, dont un axe longitudinal X, un axe transversal Y et un axe vertical Z. Selon l'exemple illustré, la machine 1 est pourvue d'un plateau 3 s'étendant suivant les axes longitudinal X et transversal Y, en étant surplombé par une tête de soudage 4 suivant l'axe vertical Z.

Il est compris que l'extension du plateau 3 suivant le plan longitudinal/transversal X/Y et l'orientation de la tête de soudage 4 par rapport au plateau 3 suivant l'axe vertical Z sont mentionnés pour exemple. Dans le cadre de l'invention, les axes définissant le plan d'extension du plateau 3 et en corollaire l'axe d'orientation de la tête de soudage 4 par rapport au plateau 3, peuvent être orientés différemment selon un quelconque repère orthonormé. Les emballages sont formés par thermosoudage par friction entre deux films 5,6 thermoscellables multicouches qui sont maintenus superposés en application l'un contre l'autre sur le plateau 3.

En se reportant aussi sur la figure 2, un premier film 5 est orienté vers la tête de soudage 4 et un deuxième film 6 est orienté vers le plateau 3. Les films 5,6 comportent chacun au moins deux couches 5a,5b ; 6a,6b, dont une couche externe 5a, 6a et une couche interne 5b, 6b thermoscellante qui est fusible à une température spécifique, les couches internes 5b,6b des films 5,6 étant orientées en application l'une contre l'autre.

Sur la figure 1, les films 5,6 sont par exemple issus d'une bande 56 conditionnée en rouleau installé sur un dévidoir 7 pour permettre un déroulement pas à pas de la bande 56 le long du plateau 3. La bande 56 est repliée sur elle-même en deux flancs ménageant respectivement les films 5,6. Les films 5,6 sont ensuite fixés sur le plateau 3 en position de superposition pour leur soudage l'un à l'autre via la tête de soudage 4. Après l'obtention du soudage des films 5,6 entre eux, les films 5,6 sont acheminés vers un poste de découpe 8 de l'emballage obtenu.

La fusion des couches internes 5b,6b des films 5,6 est provoquée à partir d'une friction opérée par un outil rotatif 9 équipant la tête de soudage 4. La tête de soudage 4 est déplacée - sous contrôle de la commande numérique 2 - suivant les trois axes X,Y,Z dudit repère orthonormé. L'outil rotatif 9 est ainsi appliqué suivant l'axe Z contre la couche externe 5a du premier film 5 - comme illustré sur la figure 2 - et progresse en application contre le premier film 5 suivant les axes X et/ou Y le long d'une trajectoire TJ1 prédéfinie définissant la configuration de la ligne de soudure à obtenir entre les films 5,6.

Par suite de la fusion des couches internes 5b, 6b des films 5,6, un refroidissement des films 5,6 provoque le soudage des films 5,6 l'un à l'autre. Pour rappel, l'échauffement des films 5,6 provoque la fusion de leur couche interne 5b,6b et en conséquence l'inter-diffusion des chaînes polymères des couches internes 5b,6b des films 5,6. Un refroidissement des films 5,6 provoque ensuite le figeage des chaînes polymères inter-diffusées, tel que par cristallisation dans le cas d'exemple de polymères semi-cristallins.

Pour ce faire sur la figure 1 et plus détaillé sur la figure 2 et la figure 3 commentées plus loin, la commande numérique 2 de la machine 1 est dans sa généralité au moins équipée :
- ) d'un organe de saisie 10 de données d'entrée DE1 par un opérateur,
- ) d'un système de calcul 11 identifiant - à partir des données d'entrée DE1 préalablement saisies par un opérateur - des consignes de déplacement de la tête de soudage 4 et d'une mise en œuvre d'une motorisation 14 d'entraînement en rotation de l'outil rotatif 9.

Un module de pilotage 12 génère - à partir desdites consignes identifiées par le système de calcul 11 - des ordres de commande OC1 d'un manipulateur 13 au moins relatifs au déplacement DP1 de la tête de soudage 4 suivant les trois axes X,Y,Z dudit repère orthonormé et des ordres de commande AC2 au moins relatifs à la régulation de la motorisation 14 d'entraînement en rotation de l'outil rotatif 9 dont la tête de soudage 4 est équipée.

Sur la figure 2, l'outil rotatif 9 s'étend axialement A1 entre une extrémité proximale 9a de l'outil rotatif 9 accouplée à un arbre d'entraînement 15 manœuvrable en rotation par ladite motorisation 14, et une extrémité distale 9b de l'outil rotatif 9 dont la face 9c de bout - de configuration plane - est destinée à être appliquée contre la couche externe 5a du premier film 5. L'outil rotatif 9 est composé d'au moins deux corps, dont :
- ) un corps proximal 16a issu d'un matériau thermiquement isolant, qui est accouplé à son extrémité proximale 9a au dit arbre d'entraînement 15 pour la mise en rotation de l'outil rotatif procurant par friction le thermosoudage des films 5,6 via leurs couches internes respectives 5b,6b, et
- ) un corps métallique 16b issu d'un matériau à très faible coefficient de dilatation, qui est monté sur le corps proximal 16a à l'extrémité distale 9b de l'outil rotatif 9, ledit corps métallique 16b constitutif de l'outil rotatif 9 étant appliqué à sa face 9c de bout contre la couche externe 5a du premier film 5.

Le corps métallique 16b et un dispositif de chauffage 17 par induction électromagnétique du corps métallique 16b forment conjointement un moyen de chauffage annexe 16b,17 de l'outil rotatif 9 à son extrémité distale 9b. Le dispositif de chauffage 17 associe une bobine inductive 17a génératrice d'un champ électromagnétique autour du corps métallique 16b et un organe d'activation 17b de la bobine d'induction 17a qui l'alimente à cet effet en courant électrique.

En se reportant aussi à la figure 3, l'alimentation en courant électrique de la bobine inductive 17a par l'organe d'activation 17b est sélectivement opérée via le module de pilotage 12 sous contrôle du système de calcul 11 que comporte la commande numérique 2. Le dispositif de chauffage 17 est avantageusement installé sur la tête de soudage 4, la bobine inductive 17a entourant le corps métallique 16b.

L'activation du dispositif de chauffage 17 permet d'élever en température le corps métallique 16b constitutif de l'outil rotatif 9 à une température initiale de consigne T1 calculée par le système de calcul 11 que comporte la commande numérique 2 de la machine 1 pour provoquer une fusion des couches internes 5b, 6b des films 5,6 tel que visé plus loin. L'outil rotatif 9 est aussi équipé d'un capteur de température 18 qui s'étend à l'intérieur d'un canal 19 axial A1 que comporte l'outil rotatif 9, ledit canal 19 étant de préférence borgne à l'extrémité distale 18b de l'outil rotatif 9.

Le capteur de température 18 s'étend à l'intérieur du corps métallique 16b jusqu'en proximité de la face de bout 9c plane d'application de l'outil rotatif 9 - via le corps métallique 16b qu'il comporte - contre ladite couche externe 5a du premier film 5. Une sonde de température 18c équipant le capteur de température 18 est notamment disposée en fond borgne du canal 19.

Une carte électronique 20 est montée sur l'arbre d'entraînement 15 en rotation de l'outil rotatif 9, à son extrémité proximale 15a émergente hors de la motorisation 14 d'entraînement en rotation de l'arbre d'entraînement 15 selon l'exemple illustré. Ladite carte électronique 20 collecte des informations au moins relatives à la température effective T2 de l'outil rotatif 9 détectée par le capteur de température 18, à la dynamique en rotation de l'outil rotatif 9 détectée par un accéléromètre 21, et subsidiairement à un éventuel balourd en rotation de l'outil rotatif 9 détecté par un capteur de vibrations 22. Selon l'exemple illustré, l'accéléromètre 21 et le capteur de vibrations 22 sont installés sur la carte électronique 20, mais peuvent aussi - selon des variantes de réalisation - équiper la motorisation 14 d'entraînement en rotation de l'outil rotatif 9 ou son arbre d'entraînement 15.

La carte électronique 20 est aussi équipée d'un dispositif de communication 23 par ondes via lequel la carte électronique 20 au moins transmet au système de calcul 11 les informations collectées par la carte électronique 20, voire potentiellement aussi reçoit des informations transmises par un émetteur équipant la commande numérique 2. La carte électronique 20 est aussi équipée d'une réserve d'énergie 24 autonome pour son fonctionnement.

Par ailleurs, sur la figure 2 et la figure 3, un support 25 est interposé entre le plateau 3 et la couche externe 6a du deuxième film 6. Le support 25 est équipé d'un organe de chauffage 26 dont l'activation par le module de pilotage 12 est placée sous la dépendance du système de calcul 11 équipant la commande numérique 2, tel que détaillé ci-après en relation avec la figure 3.

Sur la figure 3, la commande numérique 2 équipant la machine 1 comporte ledit organe de saisie 10 de données d'entrée DE1 par un opérateur, qui sont transmises à un calculateur 27 que comporte le dit système de calcul 11. Le calculateur 27 génère alors - à partir des données d'entrée DE1 qui lui sont transmises - des données de sortie DS1 relatives à des consignes d'exécution de l'opération de thermosoudage des films 5,6 par la machine 1. Les données de sortie DS1 sont issues d'un traitement des données d'entrée DE1 par un modèle de calcul 27a mis en œuvre par le calculateur 27.

**Selon** les données de sortie DS1 générées par le calculateur 27 et les modalités de leur exploitation par la commande numérique 2, les données de sortie DS1 sont transmises au module de pilotage 12 sélectivement :
- ) soit directement au module de pilotage 12 pour un premier groupe de données de sortie DS1 à partir desquelles le module de pilotage 12 génère alors les ordres de commande OC1 pilotant le manipulateur 13 de la tête de soudage 4,
- ) soit indirectement au module de pilotage 12 pour un deuxième groupe de données de sortie DS1, qui sont transmises au module de pilotage 12 après leur traitement par le module de régulation 28.

Plus particulièrement, le module de pilotage 12 génère au moins les ordres de commande OC1 suivants :
- ) pour ledit premier groupe de données de sortie DS1 identifiées par le calculateur 27 via le modèle de calcul 27a, le déplacement DP1 de l'outil rotatif 9 par le manipulateur 13 de la tête de soudage 4 suivant les axes X, Y, Z du repère orthonormé. Ledit premier groupe de données de sortie DS1 comprend notamment une donnée relative à l'application à pression P1 constante suivant l'axe Z de l'outil rotatif 9 contre la couche externe 5a du premier film 5, une donnée relative à la trajectoire TJ1 à suivre par l'outil rotatif 9 en application contre la couche externe 5a du premier film 5 lors de l'opération de soudage, et des données relatives à la cinématique et la vitesse de déplacement VD1 - qui est priorisée optimisée et à valeur constante - de l'outil rotatif 9 suivant les axes X,Y le long de la trajectoire TJ1 à suivre en application contre la couche externe 5a du premier film 5, et
- ) pour ledit deuxième groupe de données de sortie DS1 identifiées par le module de régulation 28, une donnée relative à l'activation AC1 du dispositif de chauffage 17 pour chauffer le corps métallique 16b à la température initiale de consigne T1 préalablement à son application contre le premier film 5 - et/ou marginalement en cas d'une potentielle insuffisance de montée en température de l'outil rotatif 9 au cours de l'opération de soudage tel que précédemment mentionné - et une donnée relative à l'activation AC2 de la motorisation 14 d'entraînement en rotation de l'outil rotatif 9 à une vitesse de rotation effective VN1 potentiellement variable comme détaillée plus loin.

Subsidiairement le cas échéant, les ordres de commande OC1 générés par le module de pilotage 12 comprennent aussi :
- ) une activation AC3 à un seuil de température S1 de l'organe de chauffage 26 équipant le support 25 sur lequel repose le deuxième film 6, dont la valeur maximale est déterminée par un organe de calcul 29 au plus proche d'une donnée de sortie DS1 relative à une température de consigne de soudage T3 entre les films 5, 6 - générée par le calculateur 27 via le module de calcul 27a - sous condition d'être inférieure à la température de fusion des couches externes 5a,6a des films 5,6,
- ) une activation AC4 d'un générateur 30 d'un signal d'alerte 30a - visuel et/ou sonore par exemple - d'un balourd excessif de l'outil rotatif 9. Un tel balourd excessif est identifié par ledit générateur 30 d'un signal alerte 30a à partir d'une comparaison entre d'une part une information de balourd IB1 générée le capteur de vibrations 22 et transmise par la carte électronique 20 au générateur 30 d'un signal alerte 30a, et d'autre part un seuil S2 toléré prédéfini de la fréquence et/ou de l'amplitude maximale(s) admises des vibrations 22 mesurées.

Plus précisément, les données d'entrées DE1 transmises au calculateur 27 et traitées par le modèle de calcul 27a sont au moins relatives :
- ) à la trajectoire TJ1 à suivre par l'outil rotatif 9,
- ) au diamètre D1 de l'outil rotatif 9 considéré à la face 9c de bout plane de son extrémité distale 9b prévue d'être appliquée contre la couche externe 5a du premier film 5,
- ) à l'épaisseur EP1 des couches 5a,5b ; 6a,6b des films 5,6 et aux matériaux M1 dont elles sont respectivement issues, qui sont déterminants des caractéristiques physicochimiques des couches 5a,5b ; 6a,6b des films 5,6. De telles données d'entrée EP1, M1 sont déterminantes en ce qui concerne notamment la température de fusion des couches internes 5b, 6b des films 5,6 et la conductivité thermique et/ou de la résistance des couches externes 5a, 6a des films 5,6 à la friction opérée sous pression P1 par l'outil rotatif 9, notamment concernant la couche externe 5a du premier film 5.

Les données d'entrée DE1 sont transmises au calculateur 27, qui génère plus spécifiquement - via le modèle de calcul 27a - les données de sortie DS1 suivantes qui sont notamment réparties par groupes de données de sortie DS1 en fonction sélectivement de leur exploitation directe par le module de pilotage 12 pour générer les ordres de commande OC1, ou de leur régulation préalable par le module de régulation 28 tel que précédemment visé :
- ) un premier groupe de données de sortie DS1 priorisées sont directement transmises au module de pilotage 12, dont la trajectoire TJ1 à suivre par l'outil rotatif 9 en application contre la couche externe 5a du premier film 5, la vitesse de déplacement VD1 de l'outil rotatif 9 le long de sa trajectoire TJ1 - optimisée à valeur constante - et la pression P1 exercée à valeur constante par l'outil rotatif 9 contre la couche externe 5a du premier film 5, et
- ) un deuxième groupe de données de sortie DS1 sont transmises au module de régulation 28, dont une vitesse de rotation nominale VN2 de l'outil rotatif 9 et une température de consigne de soudage T3 des films 5,6 entre eux.

Le module de régulation 28 est subdivisé en deux régulateurs 28a, 28b distincts, dont :
- ) un premier régulateur 28a d'activation du moyen de chauffage annexe 16b,17 de l'outil rotatif 9 à ladite température initiale de consigne T1, à partir de la température de consigne de soudage T3, et
- ) un deuxième régulateur 28b de la vitesse de rotation effective VN1 de l'outil rotatif 9 à appliquer par le module de pilotage 12, à partir au moins de la vitesse de rotation nominale VN2 de l'outil rotatif 9, de la température de consigne de soudage T3 des films 5,6 entre eux et de la température effective T2 de l'outil rotatif 9 mesurée en continu par le capteur de température 18.

**Par** suite des ordres de commande OC1 générés par le module de pilotage 12 pour réaliser l'opération de thermosoudage entre les films 5, 6 :
- ) l'outil rotatif 9 est chauffé à la température initiale de consigne T1 identifiée par le module de régulation 28 - notamment le premier régulateur 28a - par activation AC1 via le module de pilotage 12 du moyen de chauffage annexe 16b, 17 de l'outil rotatif 9, puis
- ) l'outil rotatif 9 est entraîné en rotation par activation AC2 via le module de pilotage 12 de ladite motorisation 14 à la vitesse de rotation effective VN1 à appliquer qui est identifiée par le module de régulation 28, notamment via le deuxième régulateur 28b. L'outil rotatif 9 est alors appliqué contre le premier film 5 en début de la trajectoire TJ1 à suivre par l'outil rotatif 9, à une pression P1 identifiée par le calculateur 27 via le modèle de calcul 27a, puis
- ) l'outil rotatif 9 est entraîné par la tête de soudage 4 dont la cinématique et la dynamique sont commandées sous contrôle du module de pilotage 12, suivant sa trajectoire TJ1 conformément à la vitesse de déplacement VD1 identifiée par le calculateur 27 via le modèle de calcul 27a.

Tout au long de la trajectoire TJ1 suivie par l'outil rotatif 9, la température de l'outil rotatif 9 est mesurée en continu par le capteur de température 18. La température de l'outil rotatif 9 est maintenue sensiblement constante en exploitant au besoin une variation de la vitesse de rotation de l'outil rotatif 9 conformément à la vitesse de rotation effective VN1 de l'outil rotatif 9 qui est identifiée en continu par le module de régulation 28, notamment via le deuxième régulateur 28b.

**Une** variation de la vitesse de rotation effective VN1 de l'outil rotatif 9 est éventuellement commandée en fonction d'une insuffisance de la température effective T2 de l'outil rotatif 9 mesurée en continu par le capteur de température 18. Une telle insuffisance de température est identifiée par le capteur de température 18 au centre de la face de bout 9c de l'outil rotatif, pour en accroître la pertinence compte tenu de la différence de température de l'outil rotatif 9 entre son centre et sa périphérie.

La température effective T2 de l'outil rotatif 9 peut par exemple éventuellement varier le long de sa trajectoire par suite :
- ) d'un contact de l'outil rotatif 9 contre le premier film 5 - en un point axial de contact aval plus froid qu'un point axial de contact amont suivant le sens de progression de l'outil rotatif 9 le long de sa trajectoire TJ1,
- ) d'un changement de direction de l'outil rotatif 9 le long de sa trajectoire TJ1, d'autant plus si un tel changement de direction est conséquent, et/ou
- ) d'une éventuelle surchauffe de l'outil rotatif 9.

Dans un tel cas de variation de la température effective T2 de l'outil rotatif 9, une telle variation est éphémère en étant immédiatement corrigée par le module de régulation 28 - notamment via le deuxième régulateur 28b - qui régule en conséquence la vitesse de rotation effective VN1 de l'outil rotatif 9 avec pour effet de rétablir rapidement la température de l'outil rotatif 9 conformément à la température de consigne de soudage T3 identifiée par le calculateur 27.

La température effective T2 de l'outil rotatif 9 est dès lors maintenue sensiblement constante tout au long de sa trajectoire TJ1 via une variation de la vitesse de rotation effective VN1 de l'outil rotatif 9 et le cas échéant par une activation temporaire du moyen de chauffage annexe 16b, 17 de l'outil rotatif tel que précédemment visé. L'application de l'outil rotatif 9 contre le premier film 5 à son extrémité distale 9b via la face 9c de bout plane du corps métallique 16b est opérée à une pression P1 exercée par l'outil rotatif 9 contre la couche externe 5a du premier film 5, qui peut être modérée et contrôlée à valeur constante par le système de calcul 11.

Les cadences de production des emballages en sont améliorées en priorisant la vitesse de déplacement VD1 de l'outil rotatif 9 le long de sa trajectoire TJ1, et en maintenant constante la température effective T2 de l'outil rotatif 9 tout au long de sa trajectoire. La ligne de soudure obtenue entre les films 5,6 est homogène, fiable et de qualité. Les films 5,6 sont préservés d'une détérioration - notamment d'une dégradation par l'outil rotatif 9 de la couche externe 5a du premier film 5 - en évitant une opération de malaxage des films 5,6 qui serait complémentaire à la friction opérée.

L'interface Homme-Machine (IHM) est améliorée, la tâche de l'opérateur humain étant simplifiée en étant réduite à la saisie de données d'entrée DE1 objectives permettant de fournir des données de sortie DS1 fiables au module de pilotage 12, après leur traitement sélectif et/ou itératif par le calculateur 27 et par le module de régulation 28 lui-même subdivisé en deux régulateurs 28a, 28b traitant sélectivement les données fournies par le modèle de calcul 27a.

## Revendications

1. Procédé de thermosoudage par friction via un outil rotatif (9) entre deux films (5,6) thermoscellants superposés, dont un premier film (5) et un deuxième film (6), les films (5,6) comportant chacun une couche externe (5a, 6a) et une couche interne (5b, 6b) thermoscellantes, procédé selon lequel :
- ) les films (5,6) sont installés superposés sur un plateau (3) équipant une machine (1) à commande numérique (2) de thermosoudage par friction des films (5,6) entre eux, les couches internes (5b, 6b) des films (5,6) étant orientées l'une vers l'autre en position de thermosoudage des films (5,6) entre eux, la couche externe (6a) du deuxième film (6) étant orientée vers le plateau (3) et la couche externe (5a) du premier film (5) étant orientée vers une tête de soudage (4) porteuse de l'outil rotatif (9) et d'une motorisation (14) d'entraînement en rotation de l'outil rotatif (9),
- ) un opérateur saisit des données d'entrée (DE1) relatives au moins aux caractéristiques structurelles des films (5,6) et à une trajectoire (TJ1) à suivre par l'outil rotatif (9) en application axiale contre la couche externe (5a) du premier film (5), à partir desquelles données d'entrée (DE1) et sous dépendance de données d'instructions transmises par la commande numérique (2) à un module de pilotage (12), le module de pilotage (12) génère des ordres de commande (OC1, AC2) au moins relatifs d'une part à un entraînement de l'outil rotatif (9) à une vitesse de rotation (VN1) de consigne et d'autre part à un déplacement (DP1) de la tête de soudage (4) selon une cinématique et une dynamique de déplacement (DP1) de l'outil rotatif (9) suivant ladite trajectoire (TJ1) conformément à l'obtention d'une température de consigne de soudage (T3) des films (5,6) entre eux,
procédé **caractérisé en ce qu'**il comporte au moins les opérations suivantes :
- ) préalablement à l'application de l'outil rotatif (9) contre le premier film (5) et sous contrôle d'un système de calcul (11) équipant de la commande numérique (2), préchauffer l'outil rotatif (9) par un moyen de chauffage annexe (16b, 17), à une température initiale de consigne (T1) apte à provoquer une amorce de fusion de la couche interne (5b, 6b) des films (5, 6), puis
- ) le préchauffage de l'outil rotatif étant interrompu, procéder au soudage par friction des films (5, 6) entre eux via l'outil rotatif (9), en mesurant et en transmettant audit système de calcul (11) la température effective (T2) mesurée en continu au point de contact axial contre le premier film (5) de l'outil rotatif (9) le long du suivi de sa trajectoire (TJ1), et en régulant via ledit système de calcul (11) la vitesse de rotation de l'outil rotatif (9) en prenant en compte au moins ladite température effective (T2) mesurée, conformément à l'obtention le long de ladite trajectoire (TJ1) d'une température de chauffage des films (5,6) conforme à ladite température de consigne de soudage (T3).

2. Procédé selon la revendication 1, **caractérisé en ce que** la régulation de la vitesse de rotation de l'outil rotatif (9) par le système de calcul (11) prend aussi en compte l'un quelconque au moins des paramètres suivants :
- ) le diamètre (D1) de l'outil rotatif (9),
- ) la dynamique de mise en rotation de l'outil rotatif (9), en fonction de la vitesse de déplacement (VD1) de l'outil rotatif (9) suivant ladite trajectoire (TJ1) et de la pression (P1) exercée par l'outil rotatif (9) contre le premier film (5),
- ) la température intrinsèque des films (5,6) mesurée en continu au point de contact axial de l'outil rotatif (9) contre le premier film (5).

3. Procédé selon la revendication 2, **caractérisé en ce que** les valeurs respectives de la vitesse de déplacement (VD1) de l'outil rotatif (9) suivant ladite trajectoire (TJ1) et de la pression (P1) exercée par l'outil rotatif (9) contre la couche externe (5a) du premier film (5) sont priorisées à valeurs constantes, la température de soudage des films (5,6) étant adaptée par variation de la vitesse de rotation de l'outil rotatif (9) conformément à l'obtention de la température de consigne de soudage (T3) maintenue constante suivant la totalité de la trajectoire (TJ1) suivie par l'outil rotatif (9).

4. Procédé selon l'une quelconque des revendications 2 et 3, **caractérisé en ce que** le procédé comporte, durant la période de soudage des films (5,6) entre eux et sous contrôle du système de calcul (11), une opération de chauffage d'un support (25) interposé entre le deuxième film (6) et le plateau (3) sur lequel reposent les films (5,6) superposés, le support (25) chauffé élevant en température les films (5,6) superposés à un seuil de température (S1) dont la valeur maximale est au plus proche de la température de consigne de soudage (T3) tout en restant inférieure à la température de fusion des couches externes (5a,6a) des films (5,6).

5. Procédé selon l'une quelconque des revendications précédentes, **caractérisé en ce qu'**un modèle de calcul (27a) mis en œuvre par un calculateur (27) que comporte le système de calcul (11), détermine des données de sortie (DS1) à partir desdites données d'entrée (DE1), les données d'entrée (DE1) comprenant en outre au moins le diamètre (D1) de l'outil rotatif (9) et les données de sortie (DS1) comprenant au moins la trajectoire (TJ1) à suivre par l'outil rotatif (9), la vitesse de déplacement (VD1) de l'outil rotatif (9), la pression (P1) exercée par l'outil rotatif (9) contre le premier film (5), une vitesse de rotation nominale (VN2) de l'outil rotatif (9) et la température de consigne de soudage (T3) des films (5,6) entre eux.

6. Procédé selon la revendication 5, **caractérisé :**
**en ce qu'**au moins les données de sortie (DS1) relatives à la vitesse de déplacement (VD1) de l'outil rotatif (9) et à la pression (P1) exercée par l'outil rotatif (9) contre le premier film (5) sont priorisées en étant directement transmises et exploitées par ledit module de pilotage (12), et
**en ce que** le système de calcul (11) régule via un module de régulation (28) qu'il comporte les valeurs suivantes transmises au module de pilotage (12) :
- ) ladite température initiale de consigne (T1), à partir au moins de la donnée de sortie (DS1) relative à la température de consigne de soudage (T3), et
- ) la vitesse de rotation effective (VN1) de l'outil rotatif (9) à appliquer par le module de pilotage (12), à partir de la donnée de sortie (DS1) relative à la vitesse de rotation nominale (VN2) de l'outil rotatif (9), de la donnée de sortie (DS1) relative à la température de consigne de soudage (T3) et de la température effective (T2) de l'outil rotatif (9) mesurée en continu au point de contact axial entre le premier film (5) et l'outil rotatif (9) le long de sa trajectoire (TJ1).

7. Procédé selon l'une quelconque des revendications 4 à 6, **caractérisé en ce que** ledit seuil de température (S1) des films (5,6) superposés chauffés via le support (25) est calculé par un organe de calcul (29) à partir de la donnée de sortie (DS1) relative à la température de consigne de soudage (T3), ledit seuil de température (S1) calculé inférieur à température de consigne de soudage (T3) étant transmis par le module de pilotage (12) contrôlant l'activation d'un organe de chauffage (26) du support (25).

8. Procédé selon la revendication 6, **caractérisé :**
**en ce que** les données d'entrée (DE1) se rapportent au moins aux matériaux (M1) dont sont respectivement issus les films (5,6), à l'épaisseur (EP1) des films (5,6), au diamètre (D1) de l'outil rotatif (9), et à la trajectoire (TJ1) à suivre par l'outil rotatif (9),
**en ce que** les données de sortie (DS1) issues du calcul opéré par le modèle de calcul (27a) se rapportent au moins à la trajectoire (TJ1) à suivre par l'outil rotatif (9), à la température de consigne de soudage (T3), à une vitesse de rotation nominale (VN2) de l'outil rotatif (9), à la pression (P1) à exercer contre la couche externe (5a) du premier film (5) par l'outil rotatif (9) le long de sa trajectoire (TJ1) et à une vitesse de déplacement (VD1) optimisée de l'outil rotatif (9) le long de sa trajectoire (TJ1), et
**en ce que** le module de régulation (28) régule au moins :
- ) la température initiale de consigne (T1) à appliquer à partir de la température de consigne de soudage (T3) et de la différence de température de la couche externe (5a) du premier film (5) entre le point de contact axial courant de l'outil rotatif (9) et un point de contact axial aval de l'outil rotatif (9) suivant le sens de déplacement (DP1) de l'outil rotatif (9) le long de sa trajectoire (TJ1), et
- ) la vitesse de rotation effective (VN1) de l'outil rotatif (9) à appliquer à partir de la température de consigne de soudage (T3) et de la vitesse de rotation nominale (VN2) de l'outil rotatif (9), la régulation de la vitesse de rotation effective (VN1) de l'outil rotatif (9) étant corrigée par ledit système de calcul (11) équipant la commande numérique (2) au moins en fonction de la température effective (T2) de l'outil rotatif (9) mesurée en continu au point de contact axial entre l'outil rotatif (9) et le premier film (5) le long de sa trajectoire (TJ1).

9. Procédé selon la revendication 8, **caractérisé en ce que** d'une part les données de sortie (DS1) issues du calcul opéré par le modèle de calcul (27a) et d'autre part les régulations opérées par ledit module de régulation (28), sont itérativement calculées et corrélées entre elles pour identifier les limites du domaine de soudage conditionnant les valeurs des paramètres de fonctionnement de la machine (1) à appliquer par le module de pilotage (12) pour réaliser le thermosoudage entre les films (5,6).

10. Machine (1) à commande numérique (2) de thermosoudage par friction via un outil rotatif (9) entre deux films (5,6) thermoscellants superposés, organisée pour la mise en œuvre d'un procédé de thermosoudage selon l'une quelconque des revendications précédentes, la machine (1) étant au moins équipée :
- ) d'un dit plateau (3) d'installation desdits films (5,6) superposés,
- ) d'une dite tête de soudage (4) porteuse de l'outil rotatif (9) et d'une dite motorisation (14) d'entraînement en rotation de l'outil rotatif (9),
- ) d'un dit manipulateur (13) de déplacement (DP1) de la tête de soudage (4) suivant les trois axes d'un repère orthonormé, dont deux axes définissent un plan de superposition des films (5,6) et dont le troisième axe définit la direction d'application axiale de l'outil rotatif (9) contre les films (5,6) superposés,
- ) de ladite commande numérique (2) au moins équipée d'un dit organe de saisie (10) par un opérateur de dites données d'entrée (DE1), d'un dit système de calcul (11) générant à partir des données d'entrée (DE1) des consignes exploitées par un dit module de pilotage (12) qui génère de dits ordres de commande (OC1, AC2) relatifs au moins à une mise en rotation de l'outil rotatif (9) à une dite vitesse de rotation (VN1) de consigne et à un dit déplacement (DP1) de la tête de soudage (4) selon une cinématique et une dynamique de déplacement (DP1) de l'outil rotatif (9) suivant une dite trajectoire (TJ1) prédéfinie conformément à l'obtention au moins d'une dite température de consigne de soudage (T3) des films (5,6) entre eux,
- ) d'un dit moyen de chauffage annexe (16b, 17) de l'outil rotatif (9) à ladite température initiale de consigne (T1) dont l'activation est régulée par le système de calcul (11) équipant la commande numérique (2), et
- ) d'un capteur de température (18) disposé à l'intérieur d'un canal (19) axial (A1) que comporte l'outil rotatif (9), l'extrémité distale (18b) du capteur de température (18) étant placée à l'intérieur du canal (19) à proximité de la face de bout (9c) de l'outil rotatif (9) via laquelle l'outil rotatif (9) est appliqué axialement contre ladite couche externe (5a) dudit premier film (5),
la machine (1) étant **caractérisé en ce que** le système de calcul (11) est configuré pour :
- préalablement à l'application de l'outil rotatif (9) contre le premier film (5), contrôler le préchauffage de l'outil rotatif (9) par le moyen de chauffage annexe (16b, 17), à une température initiale de consigne (T1) apte à provoquer une amorce de fusion de la couche interne (5b, 6b) des films (5, 6), puis
- le préchauffage de l'outil rotatif étant interrompu, et, pendant le soudage par friction des films (5, 6) entre eux via l'outil rotatif (9), réguler la vitesse de rotation de l'outil rotatif (9) en prenant en compte au moins une température effective (T2) mesurée, conformément à l'obtention le long de ladite trajectoire (TJ1) d'une température de chauffage des films (5,6) conforme à ladite température de consigne de soudage (T3), la température effective (T2) correspondant à une température mesurée en continu au point de contact axial contre le premier film (5) de l'outil rotatif (9) le long du suivi de sa trajectoire (TJ1).

11. Machine (1) selon la revendication 10, **caractérisée en ce que** la tête de soudage (4) est équipée d'une carte électronique (20) de collecte d'informations au moins relatives à la température détectée par le capteur de température (18) et à la dynamique en rotation de l'outil rotatif (9) détectée par un accéléromètre (21), la carte électronique (20) étant équipée au moins d'un dispositif de communication (23) par ondes via lequel la carte électronique (20) transmet au moins au système de calcul (11) les informations collectées par la carte électronique (20).

12. Machine (1) selon l'une quelconque des revendications 10 et 11, **caractérisée en ce que** ledit moyen de chauffage annexe (16b, 17) est formé d'un corps métallique (16b) que comporte l'outil rotatif (9) à son extrémité distale (9b) d'application axiale (A1) contre le premier film (5) et d'un dispositif de chauffage (17) du corps métallique (16b) qui est monté sur la tête de soudage (4).

13. Machine (1) selon l'une quelconque des revendications 10 à 12, de mise en œuvre d'un procédé selon la revendication 4, **caractérisée en ce que** la machine (1) est équipée d'un dit support (25) d'interposition entre ledit plateau (3) et ledit deuxième film (6), le support (25) étant équipé d'un organe de chauffage (26) dont l'activation par le module de pilotage (12) est placée sous la dépendance du système de calcul (11) équipant la commande numérique (2).

14. Machine (1) selon l'une quelconque des revendications 10 à 13, de mise en œuvre d'un procédé selon l'une quelconque des revendications 6 à 9, **caractérisée en ce que** le système de calcul (11) comporte un dit calculateur (27) de mise en œuvre dudit modèle de calcul (27a), le calculateur (27) étant interfacé entre l'organe de saisie (10) et ledit module de régulation (28) que comporte le système de calcul (11).

15. Machine (1) selon la revendication 14, **caractérisé en ce que** le module de régulation (28) est composé d'au moins deux régulateurs (28a, 28b) distincts, dont :
- ) un premier régulateur (28a) déterminant la température initiale de consigne (T1) du moyen de chauffage annexe (16b, 17) de l'outil rotatif (9) à partir de la température de consigne de soudage (T3), et
- ) un deuxième régulateur (28b) de la vitesse de rotation effective (VN1) de l'outil rotatif (9) à appliquer, à partir de ladite vitesse de rotation nominale (VN2), de la température de consigne de soudage (T3) et de ladite température effective (T2) de l'outil rotatif (9) mesurée en continu par le capteur de température (18) dont il est équipé.

16. Machine (1) selon l'une quelconque des revendications 10 à 15, **caractérisée en ce que** la tête de soudage (4) est équipée d'un capteur de vibrations (22) auquel l'outil rotatif (9) est soumis, l'activation d'un générateur (30) d'un signal d'alerte (30a) équipant la machine (1) étant placée sous la dépendance du capteur de vibrations (22) en étant calibrée à un seuil (S2) prédéfini de la fréquence et/ou de l'amplitude maximales tolérées des vibrations mesurées par le capteur de vibrations (22).

## Patentansprüche

1. Verfahren zum Wärmeschweißen durch Reibung über ein Drehwerkzeug (9) zwischen zwei übereinander liegenden wärmeversiegelnden Folien (5,6), darunter eine erste Folie (5) und eine zweite Folie (6), wobei die Folien (5,6) jeweils eine wärmeversiegelnde Außenschicht (5a, 6a) und eine wärmeversiegelnde Innenschicht (5b, 6b) aufweisen, wobei:
- ) die Folien (5,6) übereinander liegend auf einer Platte (3) installiert sind, die mit einer digital gesteuerten (2) Maschine (1) zum Wärmeschweißen durch Reibung der Folien (5,6) untereinander ausgestattet ist, wobei die Innenschichten (5b, 6b) der Folien (5,6) in der Position zum Wärmeschweißen der Folien (5,6) untereinander zueinander ausgerichtet sind, wobei die Außenschicht (6a) der zweiten Folie (6) zu der Platte (3) ausgerichtet ist und die Außenschicht (5a) der ersten Folie (5) zu einem Schweißkopf (4) ausgerichtet ist, der das Drehwerkzeug (9) trägt und einer Motorisierung (14) zum Drehantrieb des Drehwerkzeugs (9),
- ) ein Bediener Eingangsdaten (DE1) in Bezug auf mindestens die strukturellen Merkmale der Folien (5,6) und eine von dem Drehwerkzeug (9) axial gegen die Außenschicht (5a) der ersten Folie (5) aufzubringende Bahn (TJ1) erfasst, aus denen das Steuermodul (12) in Abhängigkeit von den von der digitalen Steuerung (2) an ein Steuermodul (12) übertragenen Befehlsdaten (OC1, AC2) Eingangsdaten (DE1) erzeugt, die sich mindestens einerseits auf einen Antrieb des Drehwerkzeugs (9) mit einer Solldrehzahl (VN1) und andererseits auf eine Verschiebung (DP1) des Schweißkopfes (4) gemäß einer Kinematik und einer Verschiebungsdynamik (DP1) des Drehwerkzeugs (9) entlang der Bahn (TJ1) bezieht, um eine Solltemperatur (T3) für das Schweißen der Folien (5,6) untereinander zu erhalten,
wobei das Verfahren **dadurch gekennzeichnet ist, dass** es mindestens die folgenden Vorgänge aufweist:
- ) vor dem Aufbringen des Drehwerkzeugs (9) an die erste Folie (5) und unter Kontrolle eines mit der digitalen Steuerung (2) ausgestatteten Berechnungssystems (11) das Drehwerkzeug (9) mit einem Begleitheizmittel (16b, 17) auf eine anfängliche Solltemperatur (T1) vorwärmen, die geeignet ist, eine Schmelzzündung der Innenschicht (5b, 6b) der Folien (5, 6) zu verursachen, dann
- ) bei unterbrochener Vorwärmung des Drehwerkzeugs die Folien (5, 6) über das Drehwerkzeug (9) miteinander reibverschweißen, indem die Wirktemperatur (T2) gemessen und kontinuierlich an das Berechnungssystem (11) an dem axialen Kontaktpunkt gegen die erste Folie (5) des Drehwerkzeugs (9) entlang der Verfolgung ihrer Bahn (TJ1) übertragen wird, und indem über das Berechnungssystem (11) die Drehzahl des Drehwerkzeugs (9) geregelt wird unter Berücksichtigung mindestens der gemessenen Wirktemperatur (T2), entsprechend dem Erhalten entlang der Bahn (TJ1) einer Erwärmungstemperatur der Folien (5,6), die der Solltemperatur für das Schweißen (T3) entspricht.

2. Verfahren nach Anspruch 1, **dadurch gekennzeichnet, dass** die Regelung der Drehzahl des Drehwerkzeugs (9) durch das Berechnungssystem (11) auch mindestens einen der folgenden Parameter berücksichtigt:
- ) den Durchmesser (D1) des Drehwerkzeugs (9),
- ) die Dynamik der Drehung des Drehwerkzeugs (9) in Abhängigkeit von der Verschiebungsgeschwindigkeit (VD1) des Drehwerkzeugs (9) entlang der Bahn (TJ1) und des Drucks (P1), der von dem Drehwerkzeug (9) gegen die erste Folie (5) ausgeübt wird,
- ) die Eigentemperatur der Folien (5, 6) kontinuierlich gemessen an dem axialen Kontaktpunkt des Drehwerkzeugs (9) gegen die erste Folie (5).

3. Verfahren nach Anspruch 2, **dadurch gekennzeichnet, dass** die jeweiligen Werte der Verschiebungsgeschwindigkeit (VD1) des Drehwerkzeugs (9) entlang der Bahn (TJ1) und des von dem Drehwerkzeug (9) gegen die Außenschicht (5a) der ersten Folie (5) ausgeübten Drucks (P1) mit konstanten Werten priorisiert werden, wobei die Schweißtemperatur der Folien (5,6) durch Variation der Drehgeschwindigkeit des Drehwerkzeugs (9) entsprechend dem Erhalten der Solltemperatur für das Schweißen (T3), die entlang der gesamten von dem Drehwerkzeug (9) verfolgten Bahn (TJ1) konstant gehalten wird, angepasst wird.

4. Verfahren nach einem der Ansprüche 2 und 3, **dadurch gekennzeichnet, dass** das Verfahren während der Schweißzeit der Folien (5,6) unter Kontrolle des Berechnungssystems (11) einen Erwärmungsvorgang eines Trägers (25) aufweist, der zwischen der zweiten Folie (6) und der Platte (3), auf der die übereinander liegenden Folien (5,6) aufliegen, eingelegt ist, wobei der erwärmte Träger (25) die übereinander liegenden Folien (5,6) auf eine Temperaturschwelle (S1) anhebt, deren Maximalwert möglichst nahe an der Solltemperatur für das Schweißen (T3) liegt und gleichzeitig unter der Schmelztemperatur der Außenschichten (5a,6a) der Folien (5,6) bleibt.

5. Verfahren nach einem der vorhergehenden Ansprüche, **dadurch gekennzeichnet, dass** ein von einem Steuergerät (27), das das Berechnungssystem (11) aufweist, umgesetztes Berechnungsmodell (27a) Ausgangsdaten (DS1) aus den Eingangsdaten (DE1) bestimmt, wobei die Eingangsdaten (DE1) ferner mindestens den Durchmesser (D1) des Drehwerkzeugs (9) und die Ausgangsdaten (DS1) mindestens die von dem Drehwerkzeug (9) zu verfolgende Bahn (TJ1), die Verschiebungsgeschwindigkeit (VD1) des Drehwerkzeugs (9), den von dem Drehwerkzeug (9) gegen die erste Folie (5) ausgeübten Druck (P1), eine Nenndrehzahl (VN2) des Drehwerkzeugs (9) und die Solltemperatur (T3) der Folien (5,6) zum Schweißen miteinander, umfasst.

6. Verfahren nach Anspruch 5, **dadurch gekennzeichnet:**
**dass** mindestens die Ausgangsdaten (DS1) in Bezug auf die Verschiebungsgeschwindigkeit (VD1) des Drehwerkzeugs (9) und des von dem Drehwerkzeug (9) gegen die erste Folie (5) ausgeübten Drucks (P1) priorisiert werden, indem sie direkt von dem Steuermodul (12) übertragen und ausgewertet werden, und
**dass** das Rechensystem (11) über ein Regelmodul (28), das es aufweist, die folgenden an das Steuermodul (12) übertragenen Werte regelt:
- ) die ursprüngliche Solltemperatur (T1), ausgehend mindestens von der Ausgangsgröße (DS1) in Bezug auf die Solltemperatur für das Schweißen (T3), und
- ) die von dem Steuermodul (12) anzuwendende Wirkdrehzahl (VN1) des Drehwerkzeugs (9), ausgehend von der Ausgangsgröße (DS1) in Bezug auf die Nenndrehzahl (VN2) des Drehwerkzeugs (9), der Ausgangsgröße (DS1) in Bezug auf die Solltemperatur für das Schweißen (T3) und der Wirktemperatur (T2) des Drehwerkzeugs (9), die kontinuierlich am axialen Kontaktpunkt zwischen der ersten Folie (5) und dem Drehwerkzeug (9) entlang seiner Bahn (TJ1) gemessen wird.

7. Verfahren nach einem der Ansprüche 4 bis 6, **dadurch gekennzeichnet, dass** die Temperaturschwelle (S1) der über den Träger (25) erwärmten übereinander liegenden Folien (5,6) von einem Rechenelement (29) aus der Ausgangsgröße (DS1) in Bezug auf die Solltemperatur für das Schweißen (T3) berechnet wird, wobei die niedrigere berechnete Temperaturschwelle (S1) als die Solltemperatur für das Schweißen (T3) von dem Steuermodul (12) übertragen wird, das die Aktivierung eines Heizelements (26) des Trägers (25) steuert.

8. Verfahren nach Anspruch 6, **dadurch gekennzeichnet:**
**dass** sich die Eingangsdaten (DE1) mindestens auf die Materialien (M1), aus denen die Folien (5,6) jeweils stammen, auf die Dicke (EP1) der Folien (5,6), auf den Durchmesser (D1) des Drehwerkzeugs (9) und auf die von dem Drehwerkzeug (9) zu verfolgende Bahn (TJ1) beziehen,
**dass** sich die Ausgangsdaten (DS1) aus der Berechnung des Rechenmodells (27a) mindestens auf die von dem Drehwerkzeug (9) zu verfolgende Bahn (TJ1), die Solltemperatur für das Schweißen (T3), eine Nenndrehzahl (VN2) des Drehwerkzeugs (9), den von dem Drehwerkzeug (9) entlang seiner Bahn (TJ1) gegen die Außenschicht (5a) der ersten Folie (5) auszuübenden Druck (P1) und eine optimierte Verschiebungsgeschwindigkeit (VD1) des Drehwerkzeugs (9) entlang seiner Bahn (TJ1) beziehen und dadurch, dass das Regelmodul (28) mindestens Folgendes regelt:
- ) die anfängliche Solltemperatur (T1), die ausgehend von der Solltemperatur für das Schweißen (T3) und der Temperaturdifferenz der Außenschicht (5a) der ersten Folie (5) zwischen dem aktuellen axialen Kontaktpunkt des Drehwerkzeugs (9) und einem dem Drehwerkzeug (9) nachgeschalteten axialen Kontaktpunkt entlang der Verschiebungsrichtung (DP1) des Drehwerkzeugs (9) entlang seiner Bahn (TJ1) aufzubringen ist, und
- ) die Wirkdrehzahl (VN1) des aufzubringenden Drehwerkzeugs (9) ausgehend von der Schweißsolltemperatur (T3) und der Nenndrehzahl (VN2) des Drehwerkzeugs (9), wobei die Regelung der Wirkdrehzahl (VN1) des Drehwerkzeugs (9) durch das Berechnungssystem (11) korrigiert wird, das die digitale Steuerung (2) mindestens in Abhängigkeit von der Wirktemperatur (T2) des Drehwerkzeugs (9) ausstattet, die kontinuierlich am axialen Kontaktpunkt zwischen dem Drehwerkzeug (9) gemessen wird und die erste Folie (5) entlang ihrer Bahn (TJ1) .

9. Verfahren nach Anspruch 8, **dadurch gekennzeichnet, dass** einerseits die Ausgangsdaten (DS1) aus der Berechnung des Berechnungsmodells (27a) und andererseits die Regelungen des Regelmoduls (28) iterativ berechnet und miteinander korreliert werden, um die Grenzen des Schweißbereichs zu identifizieren, der die Werte der Betriebsparameter der Maschine (1) bestimmt, die von dem Steuerungsmodul (12) zum Durchführen des Wärmeschweißens zwischen den Folien (5,6) aufzubringen sind.

10. Maschine (1) mit digitaler Steuerung (2) zum Wärmeschweißen mit Reibung über ein Drehwerkzeug (9) zwischen zwei übereinander liegenden wärmeversiegelten Folien (5, 6), die zum Durchführen eines Wärmeschweißverfahrens nach einem der vorhergehenden Ansprüche organisiert ist, wobei die Maschine (1) mindestens mit Folgendem ausgestattet ist:
- ) einer Platte (3) zum Installieren der übereinander liegenden Folien (5, 6),
- ) einem Schweißkopf (4), der das Drehwerkzeug (9) trägt, und einer Motorisierung (14) zum Drehantrieb des Drehwerkzeugs (9),
- ) eines Manipulators (13) zum Verschieben (DP1) des Schweißkopfes (4) entlang der drei Achsen einer orthonormierten Markierung, von denen zwei Achsen eine Überlagerungsebene der Folien (5,6) definieren und deren dritte Achse die axiale Aufbringungsrichtung des Drehwerkzeugs (9) gegen die übereinander liegenden Folien (5,6) definiert,
- ) der digitalen Steuerung (2), die mindestens mit einem Erfassungselement (10) für die Eingabedaten (DE1) durch einen Bediener ausgestattet ist, einem Berechnungssystem (11), das aus den Eingabedaten (DE1) Sollwerte erzeugt, die von einem Steuermodul (12) ausgewertet werden, das Steuerbefehle (OC1, AC2) erzeugt, die sich mindestens auf eine Drehung des Drehwerkzeugs (9) mit einer Solldrehzahl (VN1) und auf eine Bewegung (DP1) des Schweißkopfes (4) gemäß einer Kinematik und einer Dynamik der Bewegung (DP1) des Drehwerkzeugs (9) entlang einer vordefinierten Bahn (TJ1) erzeugt werden, um mindestens eine Solltemperatur für das Schweißen (T3) der Folien (5, 6) zueinander zu erhalten,
- ) eines an das Drehwerkzeug (9) angrenzenden Heizmittels (16b, 17) auf die ursprüngliche Solltemperatur (T1), deren Aktivierung durch das Berechnungssystem (11) geregelt wird, mit dem die digitale Steuerung (2) ausgestattet ist, und
- ) eines Temperatursensors (18), der innerhalb eines axialen Kanals (19) (A1) angeordnet ist, der das Drehwerkzeug (9) aufweist, wobei das distale Ende (18b) des Temperatursensors (18) innerhalb des Kanals (19) in der Nähe der Stirnseite (9c) des Drehwerkzeugs (9) platziert ist, über die das Drehwerkzeug (9) axial gegen die Außenschicht (5a) der ersten Folie (5) aufgebracht wird,
wobei die Maschine (1) **dadurch gekennzeichnet ist, dass** das Berechnungssystem (11) für Folgendes konfiguriert ist:
- vor dem Aufbringen des Drehwerkzeugs (9) an die erste Folie (5) das Vorwärmen des Drehwerkzeugs (9) durch das Begleitheizmittel (16b, 17) auf eine anfängliche Solltemperatur (T1) prüfen, die zum Schmelzen der Innenschicht (5b, 6b) der Folien (5, 6) führen kann, dann
- wobei das Vorwärmen des Drehwerkzeugs unterbrochen wird und während des Reibschweißens der Folien (5, 6) untereinander über das Drehwerkzeug (9) die Drehzahl des Drehwerkzeugs (9) regelt, wobei mindestens eine gemessene Wirktemperatur (T2) berücksichtigt wird, entsprechend dem Erhalten entlang der Bahn (TJ1) einer Erwärmungstemperatur der Folien (5,6), die der Solltemperatur für das Schweißen (T3) entspricht, wobei die Wirktemperatur (T2) einer kontinuierlich gemessenen Temperatur an dem axialen Kontaktpunkt gegen die erste Folie (5) des Drehwerkzeugs (9) entlang der Verfolgung seiner Bahn (TJ1) entspricht.

11. Maschine (1) nach Anspruch 10, **dadurch gekennzeichnet, dass** der Schweißkopf (4) mit einer Elektronikkarte (20) ausgestattet ist, die mindestens Informationen über die von dem Temperatursensor (18) erfasste Temperatur und die von einem Beschleunigungsmesser (21) erfasste Rotationsdynamik des Drehwerkzeugs (9) erfasst, wobei die Elektronikkarte (20) mindestens mit einer Wellenkommunikationsvorrichtung (23) ausgestattet ist, über die die Elektronikkarte (20) mindestens an das Berechnungssystem (11) die von der Elektronikkarte (20) erfassten Informationen überträgt.

12. Maschine (1) nach einem der Ansprüche 10 und 11, **dadurch gekennzeichnet, dass** das Begleitheizmittel (16b, 17) aus einem Metallkörper (16b) gebildet ist, der das Drehwerkzeug (9) an seinem distalen Ende (9b) zum axialen Aufbringen (A1) gegen die erste Folie (5) aufweist, und aus einer Heizvorrichtung (17) des Metallkörpers (16b), der an dem Schweißkopf (4) montiert ist.

13. Maschine (1) nach einem der Ansprüche 10 bis 12, zum Durchführen eines Verfahrens nach Anspruch 4, **dadurch gekennzeichnet, dass** die Maschine (1) mit einem besagten Träger (25) zur Zwischenlagerung zwischen der Platte (3) und der zweiten Folie (6) ausgestattet ist, wobei der Träger (25) mit einem Heizelement (26) ausgestattet ist, dessen Aktivierung durch das Steuermodul (12) in Abhängigkeit von dem Berechnungssystem (11) angeordnet ist, mit dem die digitale Steuerung (2) ausgestattet ist.

14. Maschine (1) nach einem der Ansprüche 10 bis 13 zur Durchführung eines Verfahrens nach einem der Ansprüche 6 bis 9, **dadurch gekennzeichnet, dass** das Berechnungssystem (11) ein Steuergerät (27) zum Durchführen des Berechnungsmodells (27a) aufweist, wobei das Steuergerät (27) eine Schnittstelle zwischen dem Erfassungselement (10) und dem Regelmodul (28) bildet, das das Berechnungssystem (11) aufweist.

15. Maschine (1) nach Anspruch 14, **dadurch gekennzeichnet, dass** das Regelmodul (28) aus mindestens zwei getrennten Reglern (28a, 28b) besteht, darunter:
- ) ein erster Regler (28a), der die Anfangssolltemperatur (T1) des Begleitheizmittels (16b, 17) des Drehwerkzeugs (9) aus der Solltemperatur für das Schweißen (T3) bestimmt, und
- ) einen zweiten Regler (28b) für die Wirkdrehzahl (VN1) des Drehwerkzeugs (9), die ausgehend von der Nenndrehzahl (VN2), der Solltemperatur für das Schweißen (T3) und der Wirktemperatur (T2) des Drehwerkzeugs (9) aufgebracht werden soll, die kontinuierlich von dem Temperatursensor (18), mit dem es ausgestattet ist, gemessen wird.

16. Maschine (1) nach einem der Ansprüche 10 bis 15, **dadurch gekennzeichnet, dass** der Schweißkopf (4) mit einem Schwingungssensor (22) ausgestattet ist, dem das Drehwerkzeug (9) ausgesetzt ist, wobei die Aktivierung eines Generators (30) eines Warnsignals (30a), mit dem die Maschine (1) ausgestattet ist, von dem Schwingungssensor (22) abhängig ist und auf einen vordefinierten Schwellenwert (S2) der maximal zulässigen Frequenz und/oder Amplitude der von dem Schwingungssensor (22) gemessenen Schwingungen kalibriert ist.

## Claims

1. Method for friction welding via a rotary tool (9) between two superimposed heat-sealing films (5, 6), including a first film (5) and a second film (6), the films (5, 6) each including an outer layer (5a, 6a) and an inner layer (5b, 6b) which are heat-sealing, according to which method:
- ) the films (5, 6) are installed superimposed on a platen (3) equipping a numerically controlled machine (1) (2) for friction welding the films (5, 6) to one another, the inner layers (5b, 6b) of the films (5, 6) being oriented towards one another in the position for welding the films (5, 6) to one another, the outer layer (6a) of the second film (6) being oriented towards the platen (3) and the outer layer (5a) of the first film (5) being oriented towards a welding head (4) carrying the rotary tool (9) and a motor (14) for driving the rotary tool (9) in rotation,
- ) an operator enters input data (DE1) relating to at least the structural characteristics of the films (5.6) and a trajectory (TJ1) to be followed by the rotary tool (9) in axial contact with the outer layer (5a) of the first film (5), from which input data (DE1) and depending on instruction data transmitted by the numerical control (2) to a control module (12), the control module (12) generates control commands (OC1, AC2) at least relating on the one hand to driving the rotary tool (9) at a set rotational speed (VN1) and on the other hand to a displacement (DP1) of the welding head (4) according to the kinematics and dynamics of displacement (DP1) of the rotary tool (9) along said trajectory (TJ1) in order to obtain a set temperature (T3) for welding the films (5, 6) to one another,
the method being **characterised in that** it has at least the following operations:
- ) prior to the application of the rotary tool (9) against the first film (5) and under control of a calculation system (11) equipped with the numerical control (2), preheating the rotary tool (9) using an auxiliary heating means (16b, 17), to an initial set temperature (T1) capable of initiating melting of the inner layer (5b, 6b) of the films (5, 6), then
- ) with the preheating of the rotary tool interrupted, carrying out friction welding of the films (5, 6) to one another via the rotary tool (9), by measuring and transmitting to said calculation system (11) the effective temperature (T2) continuously measured at the axial contact point against the first film (5) of the rotary tool (9) along the trajectory (TJ1) thereof, and by regulating via said calculation system (11) the rotational speed of the rotary tool (9) taking into account at least said measured effective temperature (T2), in order to obtain along said trajectory (TJ1) a heating temperature of the films (5.6) compliant with said welding set temperature (T3).

2. Method according to Claim 1, **characterised in that** the regulation of the rotational speed of the rotary tool (9) by the calculation system (11) also takes into account at least one of the following parameters:
- ) the diameter (D1) of the rotary tool (9),
- ) the rotational dynamics of the rotary tool (9), as a function of the speed of displacement (VD1) of the rotary tool (9) along said trajectory (TJ1) and the pressure (P1) exerted by the rotary tool (9) against the first film (5),
- ) the intrinsic temperature of the films (5, 6) continuously measured at the axial contact point of the rotary tool (9) against the first film (5).

3. Method according to Claim 2, **characterised in that** the respective values of the speed of displacement (VD1) of the rotary tool (9) along said trajectory (TJ1) and the pressure (P1) exerted by the rotary tool (9) against the outer layer (5a) of the first film (5) are prioritised at constant values, the welding temperature of the films (5.6) being adapted by varying the rotational speed of the rotary tool (9) in order to obtain the welding set temperature (T3) maintained constant along the entire trajectory (TJ1) followed by the rotary tool (9).

4. Method according to either one of Claims 2 or 3, **characterised in that** the method includes, during the period of welding the films (5, 6) to one another and under control of the calculation system (11), an operation of heating a support (25) interposed between the second film (6) and the platen (3) on which the superimposed films (5, 6) rest, the heated support (25) raising the temperature of the superimposed films (5, 6) to a temperature threshold (S1) whose maximum value is as close as possible to the welding set temperature (T3) while remaining lower than the melting temperature of the outer layers (5a, 6a) of the films (5, 6).

5. Method according to any one of the preceding claims, **characterised in that** a calculation model (27a) implemented by a calculator (27) that includes the calculation system (11), determines output data (DS1) from said input data (DE1), the input data (DE1) further comprising at least the diameter (D1) of the rotary tool (9) and the output data (DS1) comprising at least the trajectory (TJ1) to be followed by the rotary tool (9), the speed of displacement (VD1) of the rotary tool (9), the pressure (P1) exerted by the rotary tool (9) against the first film (5), a nominal rotational speed (VN2) of the rotary tool (9) and the set temperature (T3) for welding the films (5, 6) to one another.

6. Method according to Claim 5, **characterised:**
**in that** at least the output data (DS1) relating to the speed of displacement (VD1) of the rotary tool (9) and the pressure (P1) exerted by the rotary tool (9) against the first film (5) are prioritised by being directly transmitted and processed by said control module (12), and in that the calculation system (11) regulates via a regulation module (28) that it has the following values transmitted to the control module (12):
- ) said initial set temperature (T1), from at least the output data (DS1) relative to the welding set temperature (T3), and
- ) the effective rotational speed (VN1) of the rotary tool (9) to be applied by the control module (12), from the output data (DS1) relating to the nominal rotational speed (VN2) of the rotary tool (9), the output data (DS1) relating to the welding set temperature (T3) and the effective temperature (T2) of the rotary tool (9) measured continuously at the axial contact point between the first film (5) and the rotary tool (9) along its trajectory (TJ1).

7. Method according to any one of Claims 4 to 6, **characterised in that** said temperature threshold (S1) of the superimposed films (5, 6) heated via the support (25) is calculated by a calculation member (29) from the output data (DS1) relating to the welding set temperature (T3), said calculated temperature threshold (S1) lower than the welding set temperature (T3) being transmitted by the control module (12) controlling the activation of a heating member (26) of the support (25).

8. Method according to Claim 6, **characterised:**
**in that** the input data (DE1) relate at least to the materials (M1) from which the films (5.6) are respectively derived, to the thickness (EP1) of the films (5,6), to the diameter (D1) of the rotary tool (9), and to the trajectory (TJ1) to be followed by the rotary tool (9),
**in that** the output data (DS1) derived from the calculation carried out by the calculation model (27a) relate at least to the trajectory (TJ1) to be followed by the rotary tool (9), to the welding set temperature (T3), to a nominal rotational speed (VN2) of the rotary tool (9), to the pressure (P1) to be exerted against the outer layer (5a) of the first film (5) by the rotary tool (9) along its trajectory (TJ1) and to an optimised speed of displacement (VD1) of the rotary tool (9) along its trajectory (TJ1), and
**in that** the regulation module (28) regulates at least:
- ) the initial set temperature (T1) to be applied from the welding set temperature (T3) and the temperature difference of the outer layer (5a) of the first film (5) between the current axial contact point of the rotary tool (9) and a downstream axial contact point of the rotary tool (9) according to the direction of displacement (DP1) of the rotary tool (9) along its trajectory (TJ1), and
- ) the effective rotational speed (VN1) of the rotary tool (9) to be applied from the welding set temperature (T3) and the nominal rotational speed (VN2) of the rotary tool (9), the regulation of the effective rotational speed (VN1) of the rotary tool (9) being corrected by said calculation system (11) equipping the numerical control (2) at least according to the effective temperature (T2) of the rotary tool (9) measured continuously at the axial contact point between the rotary tool (9) and the first film (5) along its trajectory (TJ1).

9. Method according to Claim 8, **characterised in that**, on the one hand, the output data (DS1) derived from the calculation carried out by the calculation model (27a) and, on the other hand, the regulation operations carried out by said regulation module (28), are iteratively calculated and correlated with each other to identify the limits of the welding domain conditioning the values of the operating parameters of the machine (1) to be applied by the control module (12) to perform the welding between the films (5, 6).

10. Numerically controlled (2) machine (1) for friction welding via a rotary tool (9) between two superimposed heat sealing films (5, 6), organised for carrying out a welding method according to any one of the preceding claims, the machine (1) being at least equipped:
- ) with a said platen (3) for installing said superimposed films (5, 6),
- ) with a said welding head (4) carrying the rotary tool (9) and a said motor (14) for driving the rotary tool (9) in rotation,
- ) with a said manipulator (13) for displacement (DP1) of the welding head (4) along the three axes of an orthonormal reference frame, two axes of which define a plane for superimposing the films (5, 6) and the third axis of which defines the axial application direction of the rotary tool (9) against the superimposed films (5, 6),
- ) with said numerical control (2) at least equipped with said input member (10) for an operator to input said input data (DE1), with a said calculation system (11) generating from the input data (DE1) the setpoints used by a said control module (12) which generates said control commands (OC1, AC2) relating to at least rotating the rotary tool (9) at said set rotational speed (VN1) and said displacement (DP1) of the welding head (4) according to the kinematics and dynamics of displacement (DP1) of the rotary tool (9) along a predefined trajectory (TJ1) in order to obtain at least one said set temperature (T3) for welding the films (5, 6) to one another,
- ) with a said auxiliary heating means (16b, 17) of the rotary tool (9) to said initial set temperature (T1), the activation of which is regulated by the calculation system (11) equipping the numerical control (2), and
- ) a temperature sensor (18) disposed inside an axial (A1) channel (19) that includes the rotary tool (9), the distal end (18b) of the temperature sensor (18) being placed inside the channel (19) near the end face (9c) of the rotary tool (9) via which the rotary tool (9) is axially applied against said outer layer (5a) of said first film (5),
the machine (1) being **characterised in that** the calculation system (11) is configured to:
- prior to the application of the rotary tool (9) against the first film (5), control the preheating of the rotary tool (9) using an auxiliary heating means (16b, 17), to an initial set temperature (T1) capable of initiating melting of the inner layer (5b, 6b) of the films (5, 6), then
- the preheating of the rotary tool being interrupted, and, during the friction welding of the films (5, 6) to one another via the rotary tool (9), regulate the rotational speed of the rotary tool (9) taking into account at least one measured effective temperature (T2), in order to obtain along said trajectory (TJ1) a heating temperature of the films (5, 6) compliant with said welding set temperature (T3), the effective temperature (T2) corresponding to a temperature measured continuously at the axial contact point against the first film (5) of the rotary tool (9) along the trajectory (TJ1) thereof.

11. Machine (1) according to Claim 10, **characterised in that** the welding head (4) is equipped with an electronic board (20) for collecting information at least relating to the temperature detected by the temperature sensor (18) and the rotational dynamics of the rotary tool (9) detected by an accelerometer (21), the electronic board (20) being equipped with at least one wave communication device (23) via which the electronic board (20) transmits at least to the calculation system (11) the information collected by the electronic board (20).

12. Machine (1) according to either one of Claims 10 or 11, **characterised in that** said auxiliary heating means (16b, 17) is formed of a metal body (16b) that the rotary tool (9) has at its distal end (9b) for axial application (A1) against the first film (5) and a heating device (17) of the metal body (16b) which is mounted on the welding head (4).

13. Machine (1) according to any one of Claims 10 to 12, for carrying out a method according to Claim 4, **characterised in that** the machine (1) is equipped with a said support (25) interposed between said platen (3) and said second film (6), the support (25) being equipped with a heating member (26) whose activation by the control module (12) is dependent on the calculation system (11) equipping the numerical control (2).

14. Machine (1) according to any one of Claims 10 to 13, for carrying out a method according to any one of Claims 6 to 9, **characterised in that** the calculation system (11) includes a said calculator (27) for implementing said calculation model (27a), the calculator (27) being interfaced between the input member (10) and said regulation module (28) which the calculation system (11) has.

15. Machine (1) according to Claim 14, **characterised in that** the regulation module (28) is composed of at least two separate regulators (28a, 28b), including:
- ) a first regulator (28a) determining the initial set temperature (T1) of the auxiliary heating means (16b, 17) of the rotary tool (9) from the welding set temperature (T3), and
- ) a second regulator (28b) of the effective rotational speed (VN1) of the rotary tool (9) to be applied, from said nominal rotational speed (VN2), the welding set temperature (T3) and said effective temperature (T2) of the rotary tool (9) continuously measured by the temperature sensor (18) with which it is equipped.

16. Machine (1) according to any one of Claims 10 to 15, **characterised in that** the welding head (4) is equipped with a sensor (22) for measuring vibrations to which the rotary tool (9) is subjected, the activation of a generator (30) of an alert signal (30a) equipping the machine (1) being dependent on the vibration sensor (22) by being calibrated to a predefined threshold (S2) of the maximum tolerated frequency and/or amplitude of the vibrations measured by the vibration sensor (22).
